(19) Europäisches Patentamt
European Patent Office
Office européen des brevets

(11) **EP 3 560 097 B1**

## (12) EUROPÄISCHE PATENTSCHRIFT

(45) Veröffentlichungstag und Bekanntmachung des Hinweises auf die Patenterteilung:
**31.03.2021 Patentblatt 2021/13**

(51) Int Cl.:
**H02P 25/22** *(2006.01)*   **H02P 21/00** *(2016.01)*
**H02P 21/36** *(2016.01)*

(21) Anmeldenummer: **17826516.1**

(22) Anmeldetag: **22.12.2017**

(86) Internationale Anmeldenummer:
**PCT/EP2017/084316**

(87) Internationale Veröffentlichungsnummer:
**WO 2018/115406 (28.06.2018 Gazette 2018/26)**

(54) **VERFAHREN ZUM BETREIBEN EINES ANTRIEBSSYSTEMS UND ANTRIEBSSYSTEM**

METHOD FOR OPERATING A DRIVE SYSTEM, AND DRIVE SYSTEM

PROCÉDÉ POUR FAIRE FONCTIONNER UN SYSTÈME D'ENTRAÎNEMENT ET SYSTÈME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016 DE 102016226196**

(43) Veröffentlichungstag der Anmeldung:
**30.10.2019 Patentblatt 2019/44**

(73) Patentinhaber: **Lenze Drives GmbH**
**32699 Extertal (DE)**

(72) Erfinder:
- **TOLKSDORF, Andreas**
  **31789 Hameln (DE)**
- **STEUP, Dennis**
  **31855 Aerzen (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
**DE-A1-102013 208 544    US-A1- 2005 099 083**

- SMITH B H: "Synchronous Behavior of Doubly Fed Twin Stator Induction Machine", IEEE TRANSACTIONS ON POWER APPARATUS AND SYSTEMS, IEEE INC. NEW YORK, US, Bd. 82, Nr. 10, 1. Oktober 1967 (1967-10-01), Seiten 1227-1236, XP011159525, ISSN: 0018-9510
- HASHEMNIA M N ET AL: "Experimental investigations on the core loss effects in an inverter fed Brushless Doubly Fed Machine", IECON 2013 - 39TH ANNUAL CONFERENCE OF THE IEEE INDUSTRIAL ELECTRONICS SOCIETY, IEEE, 10. November 2013 (2013-11-10), Seiten 2821-2826, XP032539542, ISSN: 1553-572X, DOI: 10.1109/IECON.2013.6699578 [gefunden am 2013-12-30]

EP 3 560 097 B1

**Beschreibung**

Die Erfindung betrifft ein Verfahren zum Betreiben eines Antriebssystems und ein Antriebssystem.

Die DE 10 2013 208 544 A1 zeigt ein Antriebssystem mit einem Drehstrommotor und mindestens einem Wechselrichter. Der Drehstrommotor weist eine Welle, eine erste dreiphasige Statorwicklung, eine zweite dreiphasige Statorwicklung und ein Rotorwicklungssystem auf. Die erste dreiphasige Statorwicklung ist mit einem dreiphasigen Wechselspannungsnetz verbunden. Die zweite dreiphasige Statorwicklung ist mit dem dreiphasigen Wechselspannungsnetz derart verbunden, dass sich gegenüber einem ersten Statordrehfeld, das mittels der ersten Statorwicklung erzeugt wird, ein gegensinnig umlaufendes zweites Statordrehfeld ergibt. Das Rotorwicklungssystem ist mit der Welle drehfest mechanisch gekoppelt. Das Antriebssystem weist weiter mindestens einen Wechselrichter auf, der mit der Welle drehfest mechanisch gekoppelt ist und der elektrisch mit dem Rotorwicklungssystem gekoppelt ist. Der mindestens eine Wechselrichter ist dazu ausgebildet, Ansteuersignale für das Rotorwicklungssystem derart zu erzeugen, dass ein erstes Rotordrehfeld und ein zweites, zum ersten Rotordrehfeld gegenläufiges Rotordrehfeld erzeugt werden.

Der Erfindung liegt die Aufgabe zugrunde, ein Verfahren zum Betreiben eines Antriebssystems und ein Antriebssystem zur Verfügung zu stellen, die einen zuverlässigen Betrieb des Antriebssystems ermöglichen.

Der Erfindung löst die Aufgabe durch ein Verfahren zum Betreiben eines Antriebssystems nach Anspruch 1 und ein Antriebssystem nach Anspruch 7.

Das Verfahren dient zum Betreiben eines Antriebssystems, wie es in seinem grundsätzlichen Aufbau beispielsweise in der DE 10 2013 208 544 A1 beschrieben ist. Das Antriebssystem weist einen Drehstrommotor und mindestens einen Wechselrichter auf. Der Drehstrommotor weist eine Welle, eine erste dreiphasige Statorwicklung, eine zweite dreiphasige Statorwicklung und ein Rotorwicklungssystem auf. Die erste dreiphasige Statorwicklung ist mit einem dreiphasigen Wechselspannungsnetz verbunden. Die zweite dreiphasige Statorwicklung ist mit dem dreiphasigen Wechselspannungsnetz derart verbunden, dass sich gegenüber einem ersten Statordrehfeld, das mittels der ersten Statorwicklung erzeugt wird, ein gegensinnig umlaufendes zweites Statordrehfeld ergibt. Das Rotorwicklungssystem ist mit der Welle drehfest mechanisch gekoppelt. Das Antriebssystem weist weiter mindestens einen Wechselrichter auf, der mit der Welle drehfest mechanisch gekoppelt ist und der elektrisch mit dem Rotorwicklungssystem gekoppelt ist. Der mindestens eine Wechselrichter ist dazu ausgebildet, Ansteuersignale für das Rotorwicklungssystem derart zu erzeugen, dass ein erstes Rotordrehfeld und ein zweites, zum ersten Rotordrehfeld gegenläufiges Rotordrehfeld erzeugt werden. Die Ansteuersignale können beispielsweise Ansteuerspannungen oder Ansteuerströme sein.

Die Ansteuersignale für das Rotorwicklungssystem werden ausschließlich in Abhängigkeit von rotorseitig erfassten Signalen erzeugt.

Erfindungsgemäß werden bei dem Antriebssystem mit rotorseitiger Antriebselektronik die zur Regelung erforderlichen Größen ausschließlich über Sensorik, die auf der Rotorseite angeordnet ist, ermittelt, um eine Übertragung von zeitkritischen Messgrößen von der Statorauf die Rotorseite zu vermeiden.

Die rotorseitig erfassten Signale können Phasenstromsignale (Phasenströme) des Rotorwicklungssystems umfassen bzw. sein.

Die rotorseitig erfassten Phasenstromsignale können rechnerisch aufgeteilt werden in erste Anteile, die dem ersten Rotordrehfeld zugehören, und in zweite Anteile, die dem zweiten Rotordrehfeld zugehören.

Die dem ersten Rotordrehfeld und dem zweiten Rotordrehfeld zugeordneten Phasenstromsignale können bei unsymmetrischem zeitlichem Verlauf des dreiphasigen Wechselspannungsnetzes rechnerisch in symmetrische Anteile mit mitdrehenden und gegendrehenden Anteilen aufgeteilt werden.

Es kann ein erster, zu dem ersten Rotordrehfeld gehörender Lastwinkel aus den aufgeteilten Phasenstromsignalen berechnet werden, ein zweiter, zu dem zweiten Rotordrehfeld gehörender Lastwinkel aus den aufgeteilten Phasenstromsignalen berechnet werden, und basierend auf dem ersten Lastwinkel und dem zweiten Lastwinkel ein tatsächlicher Netzspannungswinkel und/oder eine momentane Rotorlage ermittelt werden.

Die rotorseitig erfassten Signale können weiter Rotorspannungen des Rotorwicklungssystems umfassen, wobei die Rotorspannungen des Rotorwicklungssystems in einem stromlosen Zustand des Rotorwicklungssystems gemessen werden, wobei Werte einer momentanen Netzspannungsamplitude, und/oder einer momentanen Netzfrequenz, und/oder einer momentanen Rotordrehzahl, und/oder eines momentanen Rotorlagewinkels basierend auf einem zeitlichen Verlauf der Rotorspannungen ermittelt werden.

Das erfindungsgemäße Antriebssystem weist einen Drehstrommotor und mindestens einen Wechselrichter auf. Der Drehstrommotor weist eine Welle, eine erste dreiphasige Statorwicklung, eine zweite dreiphasige Statorwicklung und ein Rotorwicklungssystem auf. Die erste dreiphasige Statorwicklung ist mit einem dreiphasigen Wechselspannungsnetz verbunden. Die zweite dreiphasige Statorwicklung ist mit dem dreiphasigen Wechselspannungsnetz derart verbunden, dass sich gegenüber einem ersten Statordrehfeld, das mittels der ersten Statorwicklung erzeugt wird, ein gegensinnig umlaufendes zweites Statordrehfeld ergibt. Das Rotorwicklungssystem ist mit der Welle drehfest mechanisch gekoppelt. Das Antriebssystem weist weiter mindestens einen, insbesondere genau einen, Wechselrichter auf, der mit der Welle drehfest mechanisch gekoppelt ist und der elektrisch mit dem Rotorwicklungssystem gekoppelt ist. Der mindestens eine Wechselrichter ist dazu ausgebildet, Ansteuersignale für das Rotorwicklungssystem derart zu erzeugen, dass ein erstes Rotordrehfeld und ein zweites, zum ersten Rotordrehfeld gegenläufiges Rotordrehfeld erzeugt werden. Der Wechselrichter ist dazu ausgebildet, die Ansteuersignale für das Rotorwicklungssystem ausschließlich in Abhängigkeit von rotorseitig erfassten Signalen zu erzeugen.

Das Antriebssystem bzw. der Wechselrichter kann eine Signalerfassungseinrichtung aufweisen, die dazu ausgebildet ist, die rotorseitigen Signale zu erfassen.

Die Erfindung wird nachfolgend unter Bezugnahme auf die Zeichnungen detailliert beschrieben. Hierbei zeigt:

Fig. 1 hoch schematisch ein Antriebssystem mit einem Drehstrommotor und einem rotorseitigen Wechselrichter,

Fig. 2 eine Zählrichtung und eine Benennung von Wechselrichterströmen,

Fig. 3 ein Beispiel eines dreiphasigen unsymmetrischen Stromsystems,

Fig. 4 verschiedene Signalverläufe,

Fig. 5 eine Lage von Stromkomponenten zu einem Bezugssystem,

Fig. 6 ein Spannungssystem an einem Rotor,

Fig. 7 ein Spannungssystem an einem Rotor mit getrennten Sternpunkten,

Fig. 8 ein Ersatzschaltbild zur Bestimmung des Lastwinkels ohne Berücksichtigung ohmscher Verluste,

Fig. 9 Lastwinkel über der Zeit bei einem Hochlauf unter konstanter Last und

Fig. 10 einen Verlauf eines Lastwinkels.

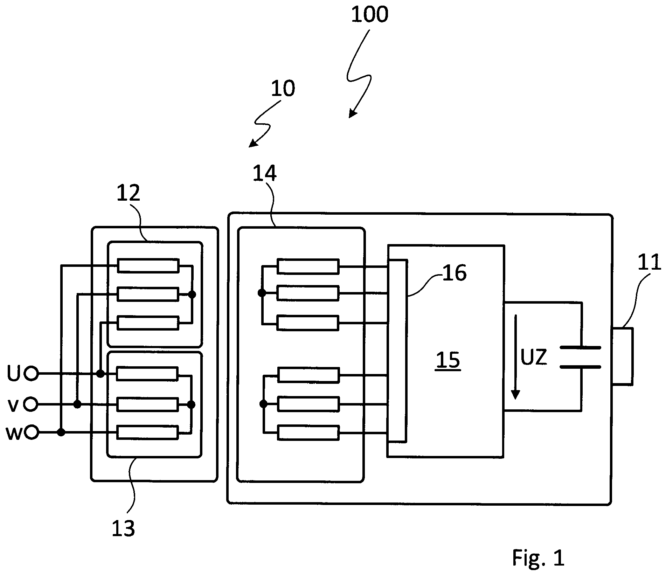

Fig. 1 zeigt hoch schematisch ein Antriebssystem 100 mit einem Drehstrommotor 10 und einem rotorseitigen Wechselrichter 15.

Der Drehstrommotor 10 weist eine schematisch dargestellte Welle 11, eine erste dreiphasige Statorwicklung 12, die mit einem dreiphasigen Wechselspannungsnetz U, V, W verbunden ist, eine zweite dreiphasige Statorwicklung 13, die mit dem dreiphasigen Wechselspannungsnetz derart zu verbinden ist, dass sich gegenüber einem ersten Statordrehfeld, das mittels der ersten Statorwicklung 12 erzeugt wird, ein gegensinnig umlaufendes zweites Statordrehfeld ergibt, und ein Rotorwicklungssystem 14 auf, das mit der Welle 11 drehfest mechanisch gekoppelt ist.

Der Wechselrichter 15 ist mit der Welle 11 drehfest mechanisch gekoppelt und elektrisch mit dem Rotorwicklungssystem 14 gekoppelt. Der mindestens eine Wechselrichter 15 ist dazu ausgebildet, Ansteuersignale für das Rotorwicklungssystem 15 derart zu erzeugen, dass ein erstes Rotordrehfeld und ein zweites, zum ersten Rotordrehfeld gegenläufiges Rotordrehfeld erzeugt werden.

Der Wechselrichter 15 weist eine Signalerfassungseinrichtung 16 auf, die dazu ausgebildet ist, die zum Betrieb des Antriebssystems 100 notwendigen rotorseitigen Signale zu erfassen.

Der Wechselrichter 15 ist dazu ausgebildet, die Ansteuersignale für das Rotorwicklungssystem 14 ausschließlich in Abhängigkeit von den mittels der Signalerfassungseinrichtung 16 rotorseitig erfassten Signalen zu erzeugen.

Es folgt als Teil der vorliegenden Beschreibung ein Kapitel 5.3, das detailliert die Erfassung der rotorseitigen Signale beschreibt.

Kapitel 5.3.1 beschreibt, wie die rotorseitig erfassten Phasenstromsignale rechnerisch aufgeteilt werden in erste Anteile, die dem ersten Rotordrehfeld zugehören, und in zweite Anteile, die dem zweiten Rotordrehfeld zugehören.

Kapitel 5.3.2 beschreibt, wie die dem ersten Rotordrehfeld und dem zweiten Rotordrehfeld mittels des rechnerischen Aufteilens zugeordneten Phasenstromsignale bei unsymmetrischem zeitlichen Verlauf des dreiphasigen Wechselspannungsnetz rechnerisch in symmetrische Anteile mit mitdrehenden und gegendrehenden Anteilen aufgeteilt werden.

Kapitel 5.3.5 beschreibt, wie Rotorspannungen des Rotorwicklungssystems in einem stromlosen Zustand des Rotorwicklungssystems gemessen werden, wobei Werte einer momentanen Netzspannungsamplitude, und/oder einer momentanen Netzfrequenz, und/oder einer momentanen Rotordrehzahl, und/oder eines momentanen Rotorlagewinkels basierend auf einem zeitlichen Verlauf der Rotorspannungen ermittelt werden.

Kapitel 5.3.6 beschreibt, wie ein erster, zu dem ersten Rotordrehfeld gehörender Lastwinkel aus den aufgeteilten Phasenstromsignalen berechnet wird, ein zweiter, zu dem zweiten Rotordrehfeld gehörender Lastwinkel aus den aufgeteilten Phasenstromsignalen berechnet wird, und basierend auf dem ersten Lastwinkel und dem zweiten Lastwinkel ein tatsächlicher Netzspannungswinkel und/oder eine momentane Rotorlage ermittelt wird/werden.

**5.3 Ermittlung der zur Regelung des Systems notwendigen Größen**

**5.3.1 Trennung der gemessenen Rotorströme in den Teilmotoren zugeordnete Anteile**

Für die Regelung der Maschine können die Phasenströme aller sechs Wechselrichterphasen als Messsignale zur Verfügung gestellt werden. Jeder Phasenstrom enthält Anteile beider Teilsysteme, weshalb eine Auftrennung der gemessenen Größen auf diese Anteile zur weiteren Verwendung in der Regelung erforderlich ist.

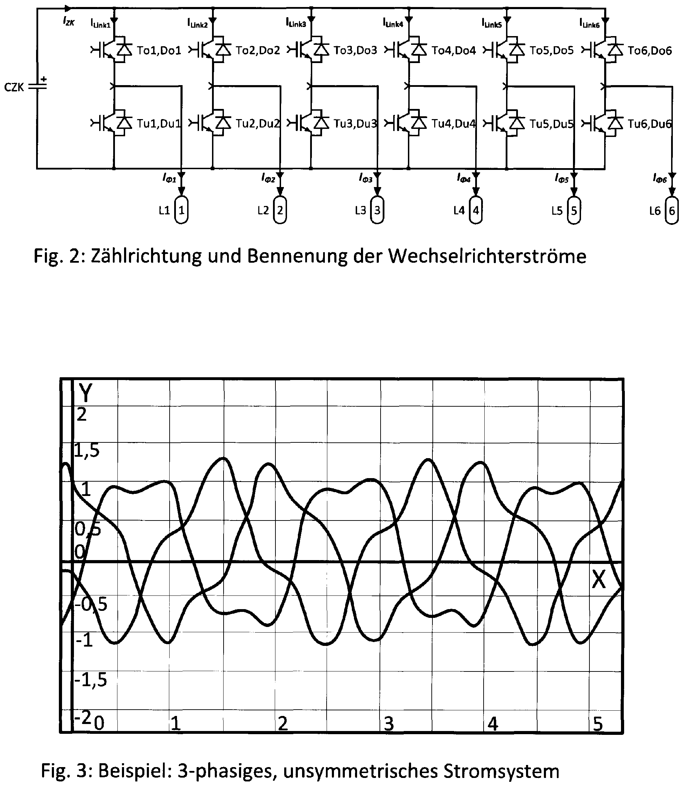

Fig. 2 zeigt die Zählrichtungen der im Folgenden verwendeten Größen.

Analog zur Zerlegung von unsymmetrischen Dreiphasengrößen in deren Mit-, Gegen- und Gleichkomponenten [28] ist es auch bei einem 6-phasigen System mit gegenlaufenden Feldern ungleicher Polpaarzahlen möglich, diese in ihre Einzelkomponenten zu zerlegen. Für das hier vorliegende System mit $p_2/p_1 = \frac{1}{2}$ ergeben sich daraus die Mit-, Gegen- und Gleichkomponenten getrennt für jedes der beiden Felder, in Summe sechs Komponenten. Dazu wird der komplexe .2 Phasendreher $\underline{a} = e^{j\frac{2}{3}\pi}$, wie bei der Bestimmung symmetrischer Komponenten üblich, genutzt.

In den sechs Phasenströmen sind Anteile der $p_1$ und $p_2$ -poligen Ströme sowohl mit ihren Mitals auch den Gegenkomponenten überlagert. Eine 0-Komponente ist nicht existent, da in diesem System kein Neutralleiter vorhanden ist, der einen solchen Strom führen könnte. Durch folgendes Gleichungssystem sind die Phasenströme beschrieben:

$$\underline{I}_{\Phi} = \begin{pmatrix} \underline{I}_{\Phi 1} \\ \underline{I}_{\Phi 2} \\ \underline{I}_{\Phi 3} \\ \underline{I}_{\Phi 4} \\ \underline{I}_{\Phi 5} \\ \underline{I}_{\Phi 6} \end{pmatrix} = \begin{pmatrix} 1 & 1 & 1 & 1 \\ \underline{a}^2 & \underline{a} & -\underline{a} & -\underline{a}^2 \\ \underline{a} & \underline{a}^2 & \underline{a}^2 & \underline{a} \\ 1 & 1 & -1 & -1 \\ \underline{a}^2 & \underline{a} & \underline{a} & \underline{a}^2 \\ \underline{a} & \underline{a}^2 & -\underline{a}^2 & -\underline{a} \end{pmatrix} \begin{pmatrix} \underline{I}_{p1m} \\ \underline{I}_{p1g} \\ \underline{I}_{p2m} \\ \underline{I}_{p2g} \end{pmatrix} \qquad (5.32)$$

Durch Addition bzw. Subtraktion jeweils gegenüberliegender Phasen erhält man daraus:

$$\begin{pmatrix} \underline{I}_{\Phi 1} + \underline{I}_{\Phi 4} \\ \underline{I}_{\Phi 3} + \underline{I}_{\Phi 6} \\ \underline{I}_{\Phi 5} + \underline{I}_{\Phi 2} \\ \underline{I}_{\Phi 1} - \underline{I}_{\Phi 4} \\ \underline{I}_{\Phi 3} - \underline{I}_{\Phi 6} \\ \underline{I}_{\Phi 5} - \underline{I}_{\Phi 2} \end{pmatrix} = 2 \begin{pmatrix} 1 & 1 & 0 & 0 \\ \underline{a}^2 & \underline{a} & 0 & 0 \\ \underline{a} & \underline{a}^2 & 0 & 0 \\ 0 & 0 & 1 & 1 \\ 0 & 0 & \underline{a}^2 & \underline{a} \\ 0 & 0 & \underline{a} & \underline{a}^2 \end{pmatrix} \begin{pmatrix} \underline{I}_{p1m} \\ \underline{I}_{p1g} \\ \underline{I}_{p2m} \\ \underline{I}_{p2g} \end{pmatrix} \qquad (5.33)$$

Daraus lassen sich die Bestimmungsgleichungen der rechnerisch ermittelten Phasenströme der beiden dreiphasigen Systeme extrahieren:

$$\underline{I}_{p1} = \begin{pmatrix} \underline{I}_{U p1} \\ \underline{I}_{V p1} \\ \underline{I}_{W p1} \end{pmatrix} = \begin{pmatrix} \underline{I}_{\Phi 1} + \underline{I}_{\Phi 4} \\ \underline{I}_{\Phi 3} + \underline{I}_{\Phi 6} \\ \underline{I}_{\Phi 5} + \underline{I}_{\Phi 2} \end{pmatrix} = 2 \begin{pmatrix} 1 & 1 \\ \underline{a}^2 & \underline{a} \\ \underline{a} & \underline{a}^2 \end{pmatrix} \begin{pmatrix} \underline{I}_{p1m} \\ \underline{I}_{p1g} \end{pmatrix} \qquad (5.34)$$

$$\underline{I}_{p2} = \begin{pmatrix} \underline{I}_{U p2} \\ \underline{I}_{V p2} \\ \underline{I}_{W p2} \end{pmatrix} = \begin{pmatrix} \underline{I}_{\Phi 1} - \underline{I}_{\Phi 4} \\ \underline{I}_{\Phi 3} - \underline{I}_{\Phi 6} \\ \underline{I}_{\Phi 5} - \underline{I}_{\Phi 2} \end{pmatrix} = 2 \begin{pmatrix} 1 & 1 \\ \underline{a}^2 & \underline{a} \\ \underline{a} & \underline{a}^2 \end{pmatrix} \begin{pmatrix} \underline{I}_{p2m} \\ \underline{I}_{p2g} \end{pmatrix} \qquad (5.35)$$

Aus Gleichung 5.34 und Gleichung 5.35 geht hervor, dass die Summe der Ströme gegenüberliegender Phasen dem zu ermittelnden Strom eines dreiphasigen $p_1$-poligen Systems entspricht und dass die Differenz der Ströme gegenüberliegender Phasen dem zu ermittelnden Strom eines dreiphasigen $p_2$-poligen Systems entspricht. In den Summen bzw. Differenzen sind die jeweiligen Mit- und Gegenkomponenten enthalten.

In den Wechselrichterphasen können die Momentanwerte der Ströme als Realteile der Komponenten der Vektoren $\underline{I}_{p1}$ und $\underline{I}_{p2}$ gemessen werden. Daraus folgt

$$I_{p1} = \begin{pmatrix} Re(\underline{I}_{Up1}) \\ Re(\underline{I}_{Vp1}) \\ Re(\underline{I}_{Wp1}) \end{pmatrix} = \begin{pmatrix} Re(\underline{I}_{\Phi1}) + Re(\underline{I}_{\Phi4}) \\ Re(\underline{I}_{\Phi3}) + Re(\underline{I}_{\Phi6}) \\ Re(\underline{I}_{\Phi5}) + Re(\underline{I}_{\Phi2}) \end{pmatrix}$$
$$= 2 \begin{pmatrix} Re(\underline{I}_{p1m}) \\ Re(\underline{a}^2\underline{I}_{p1m}) \\ Re(\underline{a}\underline{I}_{p1m}) \end{pmatrix} + 2 \begin{pmatrix} Re(\underline{I}_{p1g}) \\ Re(\underline{a}\underline{I}_{p1g}) \\ Re(\underline{a}^2\underline{I}_{p1g}) \end{pmatrix} \tag{5.36}$$

bzw.

$$I_{p2} = \begin{pmatrix} Re(\underline{I}_{Up2}) \\ Re(\underline{I}_{Vp2}) \\ Re(\underline{I}_{Wp2}) \end{pmatrix} = \begin{pmatrix} Re(\underline{I}_{\Phi1}) - Re(\underline{I}_{\Phi4}) \\ Re(\underline{I}_{\Phi3}) - Re(\underline{I}_{\Phi6}) \\ Re(\underline{I}_{\Phi5}) - Re(\underline{I}_{\Phi2}) \end{pmatrix}$$
$$= 2 \begin{pmatrix} Re(\underline{I}_{p2m}) \\ Re(\underline{a}\underline{I}_{p2m}) \\ Re(\underline{a}^2\underline{I}_{p2m}) \end{pmatrix} + 2 \begin{pmatrix} Re(\underline{I}_{p2g}) \\ Re(\underline{a}^2\underline{I}_{p2g}) \\ Re(\underline{a}\underline{I}_{p2g}) \end{pmatrix} \tag{5.37}$$

Die aus den messbaren Strömen des Wechselrichters ermittelten und den Teilsystemen zuzuordnenden Phasenströme haben dann den Verlauf

$$i_{p1}(\omega_N t, s_1) = \begin{pmatrix} i_{Up1}(\omega_N t, s_1) \\ i_{Vp1}(\omega_N t, s_1) \\ i_{Wp1}(\omega_N t, s_1) \end{pmatrix} = \begin{pmatrix} i_{\Phi1}(\omega_N t, s_1) + i_{\Phi4}(\omega_N t, s_1) \\ i_{\Phi3}(\omega_N t, s_1) + i_{\Phi6}(\omega_N t, s_1) \\ i_{\Phi5}(\omega_N t, s_1) + i_{\Phi2}(\omega_N t, s_1) \end{pmatrix} \tag{5.38}$$
$$= 2 I_{p1m} \begin{pmatrix} cos(\omega_N t s_1 + \varphi_{p1m}) \\ cos(\omega_N t s_1 + \varphi_{p1m} - \frac{2}{3}\pi) \\ cos(\omega_N t s_1 + \varphi_{p1m} + \frac{2}{3}\pi) \end{pmatrix} + 2 I_{p1g} \begin{pmatrix} cos(\omega_N t (2 - s_1) + \varphi_{p1g}) \\ cos(\omega_N t (2 - s_1) + \varphi_{p1g} + \frac{2}{3}\pi) \\ cos(\omega_N t (2 - s_1) + \varphi_{p1g} - \frac{2}{3}\pi) \end{pmatrix}$$

bzw.

$$i_{p2}(\omega_N t, s_2) = \begin{pmatrix} i_{Up2}(\omega_N t, s_2)) \\ i_{Vp2}(\omega_N t, s_2)) \\ i_{Wp2}(\omega_N t, s_2)) \end{pmatrix} = \begin{pmatrix} i_{\Phi1}(\omega_N t, s_2)) - i_{\Phi4}(\omega_N t, s_2)) \\ i_{\Phi3}(\omega_N t, s_2)) - i_{\Phi6}(\omega_N t, s_2)) \\ i_{\Phi5}(\omega_N t, s_2)) - i_{\Phi2}(\omega_N t, s_2)) \end{pmatrix} \tag{5.39}$$
$$= 2 I_{p2m} \begin{pmatrix} cos(\omega_N t s_2 + \varphi_{p2m}) \\ cos(\omega_N t s_2 + \varphi_{p2m} - \frac{2}{3}\pi) \\ cos(\omega_N t s_2 + \varphi_{p2m} + \frac{2}{3}\pi) \end{pmatrix} + 2 I_{p2g} \begin{pmatrix} cos(\omega_N t (2 - s_2) + \varphi_{p2g}) \\ cos(\omega_N t (2 - s_2) + \varphi_{p2g} + \frac{2}{3}\pi) \\ cos(\omega_N t (2 - s_2) + \varphi_{p2g} - \frac{2}{3}\pi) \end{pmatrix}$$

Auch hieran ist zu erkennen, dass in einem symmetrischen dreiphasigen System die Mitkomponente der den Teilsystemen zuzuordnenden Ströme direkt aus der Addition bzw. Subtraktion der gegenüberliegenden Phasenströme gewonnen werden kann.

Liegt kein symmetrisches System vor, sind die Mit- und Gegenkomponenten gesondert zu ermitteln. Verfahren hierzu werden im Folgenden vorgestellt.

### 5.3.2 Symmetrische Komponenten bei unsymmetrischen Strömen

Es kann im Allgemeinen nicht davon ausgegangen werden, dass die an den Motor angeschlossene Netzspannung symmetrisch ist. Eine Asymmetrie der Netzphasenspannungen führt erwartungsgemäß auch zu einer Asymmetrie der auf der Rotorseite beobachtbaren Größen, wie z.B. den Strömen. In [14, 15, 16, 9] werden Methoden vorgestellt, wie aus messbaren Momentanwerten einer Größe die Symmetrischen Komponenten des zugehörenden Systems ermittelt werden können. Dort werden auch Algorithmen benannt, Harmonische aus den Messgrößen zu filtern. Diese Algorithmen erfordern jedoch einen hohen Aufwand an Rechenleistung, insbesondere, wenn aktuelle Werte im zeitlichen Abstand, der der Zykluszeit einer angestrebten Motorregelung entspricht, erzeugt werden sollen.

Im Folgenden wird gezeigt, wie aus den $p_1$- bzw. $p_2$-poligen Feldern zugeordneten Strömen, wie in Unterabschnitt 5.3.1 gezeigt, die jeweiligen symmetrischen Komponenten ermittelt werden können. Ziel des hier vorgestellten Verfahrens ist es, eine möglichst schnelle Erfassung dieser Komponenten zu gewährleisten, um für die Regelung des Systems Größen mit einer hohen Dynamik zur Verfügung zu stellen. Die Ausführungen sind sowohl für die $p_1$-poligen Größen als auch für die $p_2$-poligen Größen anzuwenden. Im Folgenden wird auf eine Indizierung der Polpaarzahlen in den Gleichungen verzichtet.

In einem dreiphasigen beliebig asymmetrischen System setzen sich die Phasenströme aus den mit- und gegenlaufenden Anteilen sowie der Null-Komponente zusammen. Die Null-Komponente wird im Weiteren aufgrund des fehlenden Neutralleiters als nicht vorhanden angenommen.

Dann ist für die mit- bzw. gegendrehenden Ströme des sich mit $\omega_N(1-s)$ drehenden Systems, die sich auf dem Rotor einstellen, zu schreiben

$$\underline{i}_m\left(\omega_N t, s\right) = I_m \cdot \mathrm{e}^{i \cdot \left(\omega_N t\, s + \varphi_m\right)} \qquad (5.40)$$

$$\underline{i}_g\left(\omega_N t, s\right) = I_g \cdot \mathrm{e}^{i \cdot \left(\omega_N t\, (2-s) + \varphi_g\right)} \qquad (5.41)$$

Das unsymmetrische 3-phasige Stromsystem ist über

$$\underline{i}_\Phi\left(\omega_N t, s\right) = \begin{pmatrix} \underline{i}_U \\ \underline{i}_V \\ \underline{i}_W \end{pmatrix} = \underline{i}_m\left(\omega_N t, s\right) \cdot \begin{pmatrix} 1 \\ \underline{a}^2 \\ \underline{a} \end{pmatrix} + \underline{i}_g\left(\omega_N t, s\right) \cdot \begin{pmatrix} 1 \\ \underline{a} \\ \underline{a}^2 \end{pmatrix} \qquad (5.42)$$

beschrieben.

Messtechnisch erfassbar sind die Realteile der Phasenströme

$$i_\Phi\left(\omega_N t, s\right) = \begin{pmatrix} Re\left(\underline{i}_U\left(\omega_N t, s\right)\right) \\ Re\left(\underline{i}_V\left(\omega_N t, s\right)\right) \\ Re\left(\underline{i}_W\left(\omega_N t, s\right)\right) \end{pmatrix} \qquad (5.43)$$

Beispielhaft ist in Fig. 3 der zeitliche Verlauf eines angenommenen unsymmetrischen Stromsystems dargestellt. Es sind $i_m = 1$ , $\hat{i}g = 0{,}25$ , $\varphi_m = 0$ , $\varphi_g = \frac{\pi \cdot 5}{12}$ und $s = 0{,}5$ gewählt.

Transformiert man $i_\phi$ um den elektrischen Winkel des Systems $\omega_m t\,(s)$, erhält man die netzfrequenten a, β-Komponenten:

$$i_{\alpha\beta}\left(\omega_N t, s\right) = \begin{pmatrix} i_\alpha\left(\omega_N t, s\right) \\ i_\beta\left(\omega_N t, s\right) \end{pmatrix} \qquad\qquad (5.44)$$

$$= \frac{2}{3} \cdot \begin{pmatrix} cos(-\omega_m t) & cos(-\omega_m t - \frac{2\pi}{3}) & cos(-\omega_m t + \frac{2\pi}{3}) \\ sin(-\omega_m t) & sin(-\omega_m t - \frac{2\pi}{3}) & sin(-\omega_m t + \frac{2\pi}{3}) \end{pmatrix} \cdot i_\Phi\left(\omega_N t, s\right)$$

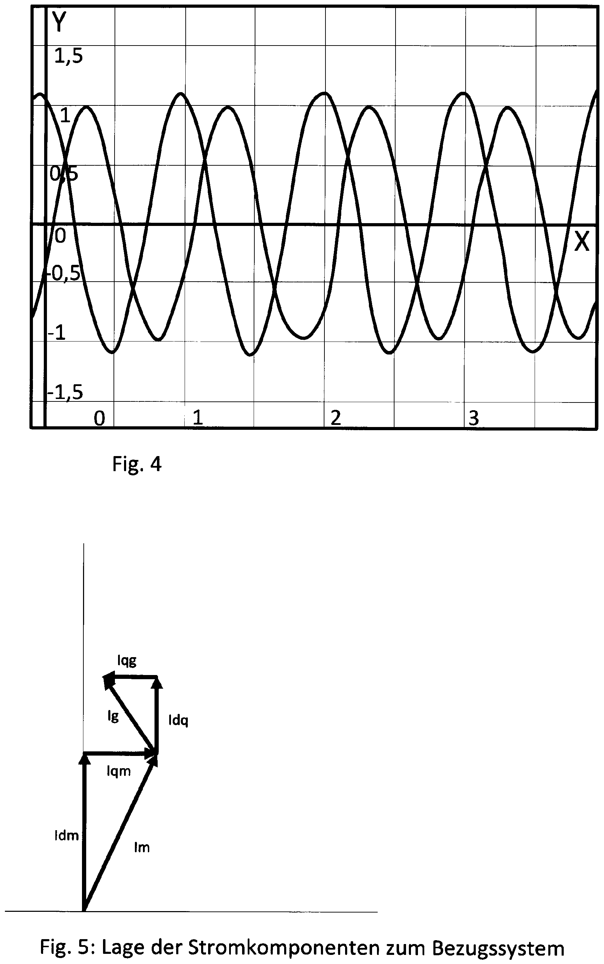

Das in Fig. 3 gezeigte dreiphasige System stellt sich in $\alpha,\beta$-Komponenten wie in Fig. 4 gezeigt dar: Aus den gemessenen und a, $\beta$-transformierten Strömen lassen sich die mit- und gegenlaufenden Einzelkomponenten ermitteln. Dazu bietet es sich an, die Komponenten des Mitsystems so zu orientieren, wie es für die Regelung des Systems direkt nutzbar wird. Da die Orientierung der Rotorspannung $U_\psi$ als bereits bestimmt angenommen werden kann, soll diese das Bezugssystem darstellen. Dann entspricht die in Phase dazu liegende Komponente des Mitsystems dem momentenbildenden Strom $I_d$ und die $\pi/2$ dazu versetzt liegende Komponente dem flussbildenden Stromanteil $I_q$. Da im Folgenden die Komponenten des Mitsystems von den Komponenten des Gegensystems differenziert werden müssen, werden diese Größen als $I_{dm}$ und $I_{qm}$ indiziert. Der in Phase zu $I_{dm}$ liegende Stromanteil des Gegensystems ist entsprechend $I_{dg}$ und der $\pi/2$ dazu versetzte Anteil $I_{qg}$. Damit setzen sich die Größen $i_\alpha$ und $i\beta$ wie folgt zusammen:

$$i_{\alpha\beta}\left(\omega_N t\right) = I_{dm} \cdot \begin{pmatrix} \cos\left(\omega_N t\right) \\ \sin\left(\omega_N t\right) \end{pmatrix} + I_{dg} \cdot \begin{pmatrix} \cos\left(\omega_N t\right) \\ -\sin\left(\omega_N t\right) \end{pmatrix} + I_{qm} \cdot \begin{pmatrix} -\sin\left(\omega_N t\right) \\ \cos\left(\omega_N t\right) \end{pmatrix} + I_{qg} \cdot \begin{pmatrix} -\sin\left(\omega_N t\right) \\ -\cos\left(\omega_N t\right) \end{pmatrix}$$
$$(5.45)$$

In Fig. 5 ist die prinzipielle Lage der Stromkomponenten zum Bezugssystem zu sehen. Erfasst man die a, $\beta$-Komponenten der transformierten Phasenströme zu zwei verschiedenen Zeitpunkten bzw. Winkeln, lassen sich die folgenden Gleichungen für die $\alpha$-Komponenten ableiten:

$$\begin{pmatrix} i_{\alpha 0} \\ i_{\alpha 1} \end{pmatrix} = \begin{pmatrix} i_\alpha(\omega_N t) \\ i_\alpha(\omega_N t + \Delta\omega_N t) \end{pmatrix} = \begin{pmatrix} \cos\left(\omega_N t\right) & -\sin\left(\omega_N t\right) \\ \cos\left(\omega_N t + \Delta\omega_N t\right) & -\sin\left(\omega_N t + \Delta\omega_N t\right) \end{pmatrix} \cdot \begin{pmatrix} I_{dm} + I_{dg} \\ I_{qm} + I_{qg} \end{pmatrix}$$

$$(5.46)$$

Daraus erhält man

$$\begin{pmatrix} \Sigma I_d \\ \Sigma I_q \end{pmatrix} = \begin{pmatrix} I_{dm} + I_{dg} \\ I_{qm} + I_{qg} \end{pmatrix} = \frac{1}{\sin\left(\Delta\omega_N t\right)} \begin{pmatrix} \sin\left(\omega_N t + \Delta\omega_N t\right) & -\sin\left(\omega_N t\right) \\ \cos\left(\omega_N t + \Delta\omega_N t\right) & -\cos\left(\omega_N t\right) \end{pmatrix} \cdot \begin{pmatrix} i_{\alpha 0} \\ i_{\alpha 1} \end{pmatrix}$$

$$(5.47)$$

Analog dazu erhält man aus den Gleichungen der $\beta$-Komponenten

$$\begin{pmatrix} i_{\beta 0} \\ i_{\beta 1} \end{pmatrix} = \begin{pmatrix} i_\beta(\omega_N t) \\ i_\beta(\omega_N t + \Delta\omega_N t) \end{pmatrix} = \begin{pmatrix} \sin\left(\omega_N t\right) & \cos\left(\omega_N t\right) \\ \sin\left(\omega_N t + \Delta\omega_N t\right) & \cos\left(\omega_N t + \Delta\omega_N t\right) \end{pmatrix} \cdot \begin{pmatrix} I_{dm} - I_{dg} \\ I_{qm} - I_{qg} \end{pmatrix}$$

$$(5.48)$$

was wiederum nach Umstellung

$$\begin{pmatrix} \Delta I_d \\ \Delta I_q \end{pmatrix} = \begin{pmatrix} I_{dm} - I_{dg} \\ I_{qm} - I_{qg} \end{pmatrix} = \frac{1}{\sin(\Delta\omega_N t)} \begin{pmatrix} -\cos(\omega_N t + \Delta\omega_N t) & \cos(\omega_N t) \\ \sin(\omega_N t + \Delta\omega_N t) & -\sin(\omega_N t) \end{pmatrix} \cdot \begin{pmatrix} i_{\beta 0} \\ i_{\beta 1} \end{pmatrix} \qquad (5.49)$$

ergibt.

Für die Einzelkomponenten kann daraus abgeleitet werden

$$I_{dm} = \frac{\Sigma I_d + \Delta I_d}{2} \qquad (5.50)$$

$$I_{dg} = \frac{\Sigma I_d - \Delta I_d}{2} \qquad (5.51)$$

$$I_{qm} = \frac{\Sigma I_q + \Delta I_q}{2} \qquad (5.52)$$

$$I_{qg} = \frac{\Sigma I_q - \Delta I_q}{2} \qquad (5.53)$$

Diese Größen stehen der Regelung unmittelbar als Ist-Größen eines Systems zur Verfügung und ersetzen die bisherigen Transformationsgleichungen der Phasenströme in d, q-Komponenten. Diese Bestimmungsgleichungen sind sowohl für das $p_1$-polige als auch für das $p_2$-polige Teilsystem anzuwenden.

### 5.3.3 Ermittlung der Rotor-, Wellen- und Netzleistung

In einem oberen Zweig der WR-Phase $\phi_1$ fließt der Strom

$$I_{Link1} = I_{\Phi 1} D_{\Phi 1} \qquad (5.54)$$

als arithmetisches Mittel des Stromes in einer Pulsperiode, wobei $I_{\phi 1}$ der momentane Phasenstrom der Phase $\phi_1$ und $D_{\phi 1}$ der in einer zu betrachtenden Pulsperiode zu bestimmende Modulationsgrad dieser Phase ist.

Analog dazu bestimmt sich der Strom im gegenüberliegenden Zweig zu

$$I_{Link4} = I_{\Phi 4} D_{\Phi 4} \qquad (5.55)$$

Die Phasenströme und die Modulationsgrade der Phasen setzen sich aus den Einzelkomponenten der beiden beteiligten dreiphasigen Systeme zusammen.

$$I_{\Phi 1} = I_{\Phi 1p1} + I_{\Phi 1p2}$$

$$D_{\Phi 1} = \frac{1}{2} + D_{\Phi 1p1} + D_{\Phi 1p2}$$

$$I_{\Phi 4} = I_{\Phi 1p1} - I_{\Phi 1p2}$$

$$D_{\Phi 4} = \frac{1}{2} + D_{\Phi 1p1} - D_{\Phi 1p2}$$

Daraus ergeben sich für die Summe der Ströme von zwei gegenüberliegenden WR-Zweigen

$$I_{Link1} + I_{Link4} = I_{\Phi 1}D_{\Phi 1} + I_{\Phi 4}D_{\Phi 4} = 2*I_{\Phi 1p1}D_{\Phi 1p1} + 2*I_{\Phi 1p2}D_{\Phi 1p2} + I_{\Phi 1p1} \quad (5.56)$$

Im symmetrischen dreiphasigen System wird die Summe der Phasenströme $I_{\phi 1p1}$ mit $\phi = U, V, W$ zu 0. Daher kann für den gesamten Zwischenkreisstrom geschrieben werden

$$I_{ZK} = I_{ZKp1} + I_{ZKp2} = 2\underbrace{\begin{pmatrix} I_{Up1} \\ I_{Vp1} \\ I_{Wp1} \end{pmatrix}^T \begin{pmatrix} D_{Up1} \\ D_{Vp1} \\ D_{Wp1} \end{pmatrix}}_{I_{ZKp1}} + 2\underbrace{\begin{pmatrix} I_{Up2} \\ I_{Vp2} \\ I_{Wp2} \end{pmatrix}^T \begin{pmatrix} D_{Up2} \\ D_{Vp2} \\ D_{Wp2} \end{pmatrix}}_{I_{ZKp2}} \quad (5.57)$$

Damit lassen sich die Anteile des Zwischenkreisstromes der Teilsysteme direkt aus den Einzelsystemen zugeordneten Stromanteilen und den Modulationsfunktionen der Einzelsysteme ableiten.
Für die Rotorleistungen der Einzelsysteme folgt

$$P_{rot1} = U_{ZK} \, I_{ZKp1} \quad (5.58)$$

$$P_{rot2} = U_{ZK} \, I_{ZKp2} \quad (5.59)$$

, für die Wellenleistungen folgt

$$P_{mech1} = U_{ZK} \, I_{ZKp1} \left(\frac{1}{s_1} - 1\right) \quad (5.60)$$

$$P_{mech2} = U_{ZK} \, I_{ZKp2} \left(\frac{1}{s_2} - 1\right) \quad (5.61)$$

und für die Netzleistungen

$$P_1 = U_{ZK} \, I_{ZKp1} \frac{1}{s_1} \quad (5.62)$$

$$P_2 = U_{ZK} \, I_{ZKp2} \frac{1}{s_2} \quad (5.63)$$

Aus diesen Herleitungen ist es ersichtlich, dass aus den Momentanwerten der gemessenen Phasenströme des rotorseitigen Wechselrichters und der Kenntnis der Modulation auf die momentanen Wirkleistungsverhältnisse geschlossen werden kann.
Sowohl bei der Berechnung der Wellen- als auch der Netzleistungen kommt es für $S_1, S_2$ beim Erreichen der jeweiligen Synchrondrehzahl zu einer Division durch 0, was bedeutet, dass hier das System vergleichbar schwer zu beobachten sein dürfte, wie es bei statorseitig betriebenen Umrichtern an einer Asynchronmaschine bei Drehzahl 0 der Fall ist. Die Drehzahl 0 dagegen liefert hier robuste Werte.

### 5.3.4 Ermittlung der rotorseitigen Blindleistung

In Unterabschnitt 5.3.3 wurden die Wirkleistungen aus den Phasenströmen und der Kenntnis der Modulation ermittelt. Ebenso ist es möglich, aus diesen Größen auf die durch den Wechselrichter erzeugten Blindleistungen im Motor zu schließen. Dazu sind die Modulationen um $\pi/2$ zu drehen. Diese Drehung ist auch durch die Subtraktion der Modulationsfunktion der jeweils beiden anderen Phasen zu erzielen. Es gilt dann

$$I_{Qp1} = \frac{1}{\sqrt{3}} \begin{pmatrix} I_{Up1} \\ I_{Vp1} \\ I_{Wp1} \end{pmatrix}^T \begin{pmatrix} D_{Wp1} - D_{Vp1} \\ D_{Up1} - D_{Wp1} \\ D_{Vp1} - D_{Up1} \end{pmatrix} \tag{5.64}$$

und

$$I_{Qp2} = \frac{1}{\sqrt{3}} \begin{pmatrix} I_{Up2} \\ I_{Vp2} \\ I_{Wp2} \end{pmatrix}^T \begin{pmatrix} D_{Wp2} - D_{Vp2} \\ D_{Up2} - D_{Wp2} \\ D_{Vp2} - D_{Up2} \end{pmatrix} \tag{5.65}$$

Daraus folgen als analoge Größen zu den Wirkleistungen im Rotor die Blindleistungen des Rotors mit

$$Q_{p1} = U_{ZK}\, I_{Qp1} \tag{5.66}$$

und

$$Q_{p2} = U_{ZK}\, I_{Qp2} \tag{5.67}$$

Die Ströme $I_{Qp1}$ und $I_{Qp2}$ sind rechnerische Größen, die im Zwischenkreis nicht direkt gemessen werden können.

### 5.3.5 Verfahren zur Bestimmung der initialen Netz- und Motorfrequenz

Vor dem Start der Wechselrichtermodulation ist zunächst sowohl die Netzfrequenz als auch die Motordrehzahl zur korrekten Initiierung der Regelung zu bestimmen. Die Bestimmung hat ohne Sensorik, die auf statorseitige Größen zugreift, zu erfolgen, um eine Übertragung der Signale auf den Rotor zu vermeiden.

Solange die Ansteuerung der Wechselrichterventile ausbleibt, ist auf der Rotorseite ein Abbild der Netzspannung zu beobachten. Über die Messung der Phasenspannungen $u_{L1\text{-}L6}$ können die Komponenten der beiden gegenläufigen Spannungssysteme ermittelt werden.

Die Berechnungen, die zur Ermittlung der Phasenströme herangezogen wurde, kann ebenso auf die Phasenspannungen angewandt werden. Für die Komponenten der beiden Spannungssysteme gilt:

$$\begin{pmatrix} u_{Up1} \\ u_{Vp1} \\ u_{Wp1} \end{pmatrix} = \frac{1}{2} \begin{pmatrix} u_{L1} + u_{L4} \\ u_{L3} + u_{V6} \\ u_{L5} + u_{U2} \end{pmatrix} \tag{5.68}$$

EP 3 560 097 B1

$$\begin{pmatrix} u_{Up2} \\ u_{Vp2} \\ u_{Wp2} \end{pmatrix} = \frac{1}{2} \begin{pmatrix} u_{L1} - u_{L4} \\ u_{L3} - u_{V6} \\ u_{L5} - u_{U2} \end{pmatrix} \qquad (5.69)$$

Allgemein lassen sich aus der Messung von zwei sinusförmig mit festem Winkel zueinander versetzt verlaufenden Spannungen die Amplituden und die Phasenwinkel zum Zeitpunkt der Messung bei $t_0 = 0$ bestimmen. Für einen Phasenversatz von $2\,\pi/3$ gilt:

$$u_1 = \hat{u} \sin(\varphi) \qquad (5.70)$$

$$u_2 = \hat{u} \sin\left(\varphi + \frac{2}{3}\pi\right) = \hat{u}\left(\sin(\varphi)\cos\left(\frac{2}{3}\pi\right) + \cos(\varphi)\sin\left(\frac{2}{3}\pi\right)\right) \qquad (5.71)$$

Daraus folgt über

$$\frac{u_2}{u_1} = \frac{\sin(\varphi)\cos\left(\frac{2}{3}\pi\right) + \cos(\varphi)\sin\left(\frac{2}{3}\pi\right)}{\sin(\varphi)} = \cos\left(\frac{2}{3}\pi\right) + \cot(\varphi)\sin\left(\frac{2}{3}\pi\right) \qquad (5.72)$$

für den Winkel $\varphi$ der Spannung zum Zeitpunkt der Messung

$$\varphi = \arctan\left(\frac{\sin\left(\frac{2}{3}\pi\right)}{\dfrac{u_2}{u_1} - \cos\left(\frac{2}{3}\pi\right)}\right) \qquad (5.73)$$

Für die Spannungen $u_1$ und $u_2$ können $u_1 = u_{Up1}$ und $u_2 = u_{Vp1}$ aus Gleichung 5.68 zur Ermittlung von $\varphi_{p1}$ und $u_1 = u_{Up2}$ und $u_2 = u_{Vp2}$ aus Gleichung 5.69 zur Ermittlung von $\varphi_{p2}$ eingesetzt werden. Auf die beiden Teilsysteme der Maschine angewandt, schreitet der Winkel $\varphi$ in Abhängigkeit von der vorliegenden Netzfrequenz und der Drehzahl des Motors fort (die Drehzahl des Motors kann bei nicht vorhandener Modulation des Wechselrichters im Allgemeinen nicht als 0 angenommen werden):

$$\varphi_{p1}(t_x) = (\omega_n - p_1\,\omega_m)\,t_x + \varphi_{p1}(t_0) \qquad (5.74)$$

$$\varphi_{p2}(t_x) = (\omega_n + p_2\,\omega_m)\,t_x + \varphi_{p2}(t_0) \qquad (5.75)$$

wobei $\omega_n$ die Kreisfrequenz der Netzspannung und $\omega_m$ die Kreisfrequenz der Motordrehzahl ist.
Setzt man für

$$\Delta\varphi_{p1} = \varphi_{p1}(t_x) - \varphi_{p1}(t_0) \qquad (5.76)$$

und

$$\Delta\varphi_{p2} = \varphi_{p2}(t_x) - \varphi_{p1}(t_0) \qquad (5.77)$$

11

sowie

$$\Delta t = t_x - t_0 \qquad (5.78)$$

erhält man aus Gleichung 5.74 und Gleichung 5.75 für die Netz- und Motorfrequenz die Ausdrücke

$$\omega_n = \frac{\Delta\varphi_{p1}\, p_2 + \Delta\varphi_{p2}\, p_1}{\Delta t\,(p_1 + p_2)} \qquad (5.79)$$

$$\omega_m = \frac{\Delta\varphi_{p2} - \Delta\varphi_{p1}}{\Delta t\,(p_1 + p_2)} \qquad (5.80)$$

Es ist dabei darauf zu achten, dass $\Delta t < T_n/4$ ($T_n$ = anzunehmende Periodendauer der Netzfrequenz) aufgrund der arctan-Funktion in Gleichung 5.73 gewählt wird.

Aus der Messung von vier rotorseitigen Spannungen gegen den Sternpunkt der Wicklung (ohne laufende Modulation des Wechselrichters) zu zwei Zeitpunkten lässt sich demnach eindeutig die Motordrehzahl und die Netzfrequenz sowie die Phasenlage der Spannungen der Teilsysteme bestimmen. Steht der Sternpunkt der Wicklung als Bezugspunkt der Messungen zur Verfügung, lassen sich die oben abgeleiteten Zusammenhänge direkt zur Bestimmung der Initialwerte für Drehzahl und Netzfrequenz anwenden.

Im Allgemeinen steht der Sternpunkt der Wicklungen nicht als Bezugspunkt der Messungen zur Verfügung. Die Spannungsmessungen der Rotorspannungen können aber gegen einen beliebigen Bezugspunkt durchgeführt werden. Dazu ist eine fünfte Rotorspannung zur Messung hinzuzuziehen.

Das Motorspannungssystem ist gegenüber dem Bezugspunkt der Messung um

$$u_{mb} = \frac{(u_{L1b} + u_{L3b} + u_{L5b})}{3} \qquad (5.81)$$

verschoben. Um diese Spannung sind die gemessenen Spannungen zu reduzieren, um die Rotorphasenspannungen zu erhalten.

Das rotorseitige Spannungssystem ist durch die Beziehungen

$$\begin{pmatrix} u_{L1b} \\ u_{L2b} \\ u_{L3b} \\ u_{L4b} \\ u_{L5b} \\ 0 \\ 0 \end{pmatrix} = \begin{pmatrix} 1 & 1 & 0 & 0 & 0 & 0 & 1 \\ 0 & 0 & 0 & 0 & 1 & -1 & 1 \\ 0 & 0 & 1 & 1 & 0 & 0 & 1 \\ 1 & -1 & 0 & 0 & 0 & 0 & 1 \\ 0 & 0 & 0 & 0 & 1 & 1 & 1 \\ 0 & 1 & 0 & 1 & 0 & 1 & 0 \\ 1 & 0 & 1 & 0 & 1 & 0 & 0 \end{pmatrix} * \begin{pmatrix} u_{Up1} \\ u_{Up2} \\ u_{Vp1} \\ u_{Vp2} \\ u_{Wp1} \\ u_{Wp2} \\ u_{mb} \end{pmatrix} \qquad (5.82)$$

beschrieben. Der Index b weist darauf hin, dass sich die indizierte Spannungsgröße auf das Bezugspotenzial bezieht. Hieraus wiederum berechnen sich die Einzelkomponenten der Spannung zu

$$\begin{pmatrix} u_{Up1} \\ u_{Up2} \\ u_{Vp1} \\ u_{Vp2} \\ u_{Wp1} \\ u_{Wp2} \\ u_{mb} \end{pmatrix} = \begin{pmatrix} \dfrac{u_{L1b} + u_{L4b}}{2} - u_{mb} \\ \dfrac{u_{L1b} - u_{L4b}}{2} \\ -\dfrac{u_{L1b} + u_{L2b} + u_{L4b} + u_{L5b}}{2} + 2\,u_{mb} \\ \dfrac{u_{L2b} - u_{L5b} + u_{L4b} - u_{L1b}}{2} \\ \dfrac{u_{L5b} + u_{L2b}}{2} - u_{mb} \\ \dfrac{u_{L5b} - u_{L2b}}{2} \\ \dfrac{u_{L1b} + u_{L3b} + u_{L5b}}{3} \end{pmatrix} \tag{5.83}$$

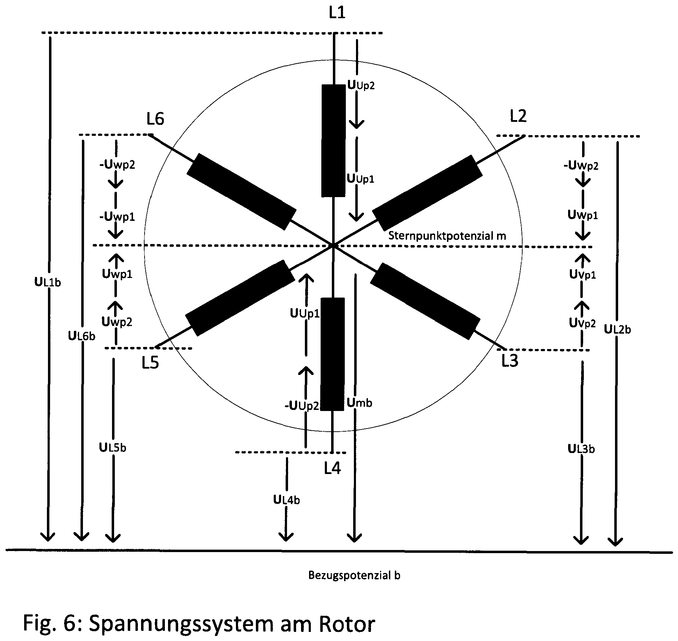

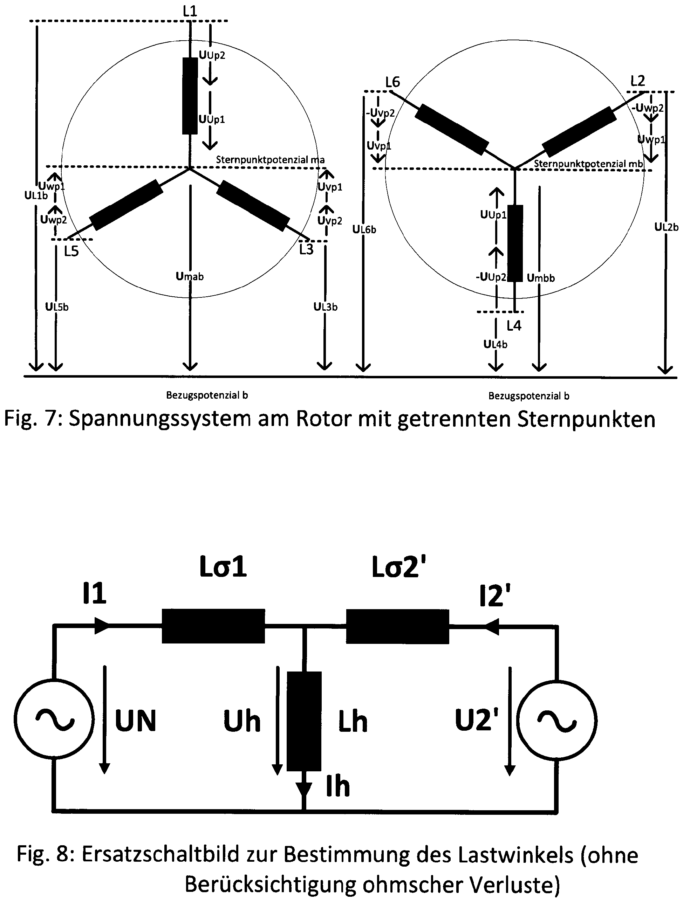

Fig. 6 zeigt ein Spannungssystem am Rotor.
Der Sternpunkt der Rotorwicklungen kann auch auf zwei unabhängige Sternpunkte verteilt sein. Die Phasen $L_1$, $L_3$, $L_5$ sowie $L_2$, $L_4$, $L_6$ sind hier jeweils auf einen eigenen Sternpunkt geführt. Dadurch sind die Spannungen der beiden Teilsysteme nach Fig. 7 beschrieben.

Das Gleichungssystem der rotorseitigen Spannungen ist zu

$$\begin{pmatrix} u_{L1b} \\ u_{L2b} \\ u_{L3b} \\ u_{L4b} \\ u_{L5b} \\ u_{L6b} \\ 0 \\ 0 \end{pmatrix} = \begin{pmatrix} 1 & 1 & 0 & 0 & 0 & 0 & 1 & 0 \\ 0 & 0 & 0 & 0 & 1 & -1 & 0 & 1 \\ 0 & 0 & 1 & 1 & 0 & 0 & 1 & 0 \\ 1 & -1 & 0 & 0 & 0 & 0 & 0 & 1 \\ 0 & 0 & 0 & 0 & 1 & 1 & 1 & 0 \\ 0 & 0 & 1 & -1 & 0 & 0 & 0 & 1 \\ 1 & 0 & 1 & 0 & 1 & 0 & 0 & 0 \\ 0 & 1 & 0 & 1 & 0 & 1 & 0 & 0 \end{pmatrix} * \begin{pmatrix} u_{Up1} \\ u_{Up2} \\ u_{Vp1} \\ u_{Vp2} \\ u_{Wp1} \\ u_{Wp2} \\ u_{mab} \\ u_{mbb} \end{pmatrix} \tag{5.84}$$

formuliert. Mit

$$u_{mab} = \frac{(u_{L1b} + u_{L3b} + u_{L5b})}{3} \tag{5.85}$$

und

$$u_{mbb} = \frac{(u_{L2b} + u_{L4b} + u_{L6b})}{3} \tag{5.86}$$

verkürzt sich das Gleichungssystem der Rotorspannungen auf

$$\begin{pmatrix} u_{L1b} - u_{mab} \\ u_{L2b} - u_{mbb} \\ u_{L3b} - u_{mab} \\ u_{L4b} - u_{mbb} \\ u_{L5b} - u_{mab} \\ u_{L6b} - u_{mbb} \end{pmatrix} = \begin{pmatrix} 1 & 1 & 0 & 0 & 0 & 0 \\ 0 & 0 & 0 & 0 & 1 & -1 \\ 0 & 0 & 1 & 1 & 0 & 0 \\ 1 & -1 & 0 & 0 & 0 & 0 \\ 0 & 0 & 0 & 0 & 1 & 1 \\ 0 & 0 & 1 & -1 & 0 & 0 \end{pmatrix} * \begin{pmatrix} u_{Up1} \\ u_{Up2} \\ u_{Vp1} \\ u_{Vp2} \\ u_{Wp1} \\ u_{Wp2} \end{pmatrix} \tag{5.87}$$

Daraus bestimmt sich

$$
\begin{pmatrix} u_{Up1} \\ u_{Up2} \\ u_{Vp1} \\ u_{Vp2} \\ u_{Wp1} \\ u_{Wp2} \end{pmatrix} = \frac{1}{2} \begin{pmatrix} (u_{L1b} + u_{L4b}) - (u_{mab} + u_{mbb}) \\ (u_{L1b} - u_{L4b}) - (u_{mab} - u_{mbb}) \\ (u_{L3b} + u_{L6b}) - (u_{mab} + u_{mbb}) \\ (u_{L3b} - u_{L6b}) - (u_{mab} - u_{mbb}) \\ (u_{L5b} + u_{L2b}) - (u_{mab} + u_{mbb}) \\ (u_{L5b} - u_{L2b}) - (u_{mab} - u_{mbb}) \end{pmatrix} \qquad (5.88)
$$

Bei zwei getrennten Sternpunkten sind demnach alle sechs Phasenspannungen gegen einen beliebigen Bezugspunkt zu messen, um daraus das Abbild der Statorspannungen für den Betriebszustand bei ruhender Modulation des Rotorwechselrichters zu ermitteln.

In einer praktischen Implementierung bietet es sich an, mit den gemessenen Phasenspannungen eine Clark-Transformation durchzuführen. Darüber entfallen die rechnerischen Anteile der Bezugsspannungen $u_{mab}$ und $u_{mbb}$. Die Transformationsgleichungen ergeben sich zu

$$
u_{p1\alpha,\beta} = \frac{1}{3} \begin{pmatrix} 1 & -\frac{1}{2} & -\frac{1}{2} \\ 0 & \frac{\sqrt{3}}{2} & -\frac{\sqrt{3}}{2} \end{pmatrix} \begin{pmatrix} (u_{L1b} + u_{L4b}) \\ (u_{L3b} + u_{L6b}) \\ (u_{L5b} + u_{L2b}) \end{pmatrix} \qquad (5.89)
$$

und

$$
u_{p2\alpha,\beta} = \frac{1}{3} \begin{pmatrix} 1 & -\frac{1}{2} & -\frac{1}{2} \\ 0 & \frac{\sqrt{3}}{2} & -\frac{\sqrt{3}}{2} \end{pmatrix} \begin{pmatrix} (u_{L1b} - u_{L4b}) \\ (u_{L3b} - u_{L6b}) \\ (u_{L5b} - u_{L2b}) \end{pmatrix} \qquad (5.90)
$$

Aus Gleichung 5.72 erhält man mit einem Phasenversatz der $\alpha$, $\beta$ -transformierten Spannungen von $\pi/2$ für den Winkel $\varphi$ nach Gleichung 5.73

$$
\varphi_{px\alpha,\beta} = arctan\left(\frac{u_{px\alpha}}{u_{px\beta}}\right) \qquad (5.91)
$$

Aus $u_{p1\alpha}$ $\beta$ und $u_{p2\alpha}$ $\beta$ kann direkt der Initialwert für den Start der Modulation des Wechselrichters abgeleitet werden. über Gleichung 5.79 und Gleichung 5.80 werden die Startwerte zur Berechnung der Netz- und Rotorfrequenz gebildet. Die Kenntnis der absoluten Startwinkel der Netzspannung bzw. der Rotorlage ist nicht explizit erforderlich, da deren Einfluss bereits in der Berechnung des Initialwertes der Spannungsmodulation enthalten ist. Die Startwinkel der Netzspannung bzw. der Rotorlage sind für den Zeitpunkt $t_0$ daher auf 0 zu setzen.

### 5.3.6 Lage- und Drehzahlerfassung

Zur näherungsweisen Bestimmung der Drehzahl aus den auf dem Rotor zu beobachtbaren Größen wird zunächst bestimmt, wie sich die Winkelbeziehungen der Rotorspannung gegenüber der Netzspannung verhält. Als Rotorspannung wird die im Stillstand zu beobachtende Spannung $U'_2$ als Bezugsgröße herangezogen. Die Spannung $U'_2$ setzt sich aus der zu erzeugenden Wechselrichterspannung und der von der Rotationsgeschwindigkeit abhängigen Spannungskomponente $(1-s)*U_\psi$ zusammen.

### 5.3.6.1 Bestimmung des Lastwinkels ohne Berücksichtigung von Rs und R'r

Für ein Teilsystem wird das Ersatzschaltbild der doppelt gespeisten Induktionsmaschine ohne Berücksichtigung der Kupfer- und Eisenverluste und ohne Sättigungs-erscheinungen angenommen.

Fig. 8 zeigt ein Ersatzschaltbild zur Bestimmung des Lastwinkels (ohne Berücksichtigung ohmscher Verluste). Ströme und Spannungen sind in den folgenden Abschnitten als komplexe Größen aufzufassen, ohne dass dieses bei der Notation berücksichtigt wird.

Als Bezugsgröße wird hier $U'_2$ festgelegt. Es soll gelten
$U'_2 = Re(U'_2)$ und daraus folgend $I_m(U'_2) = 0$.

Für die Spannung an der Hauptinduktivität $L_h$ gilt

$$U_h = U'_2 - j\omega L'_{\sigma 2} I'_2 \tag{5.92}$$

und für die Netzspannung $U_N$

$$U_N = U_h + j\omega L_{\sigma 1} I_1 \tag{5.93}$$

woraus sich

$$U_N = U'_2 \left(1 + \frac{L'_{\sigma 1}}{L_h}\right) - j\omega L'_{\sigma 2} I'_2 \left(1 + \frac{L_{\sigma 1}}{L_h} + \frac{L_{\sigma 1}}{L'_{\sigma 2}}\right) \tag{5.94}$$

entwickeln lässt.

Für den Lastwinkel $\vartheta_{last}$ zwischen $U_N$ und $U'_2$ gilt dann

$$\vartheta_{last} = asin\left(\frac{Im(U_N)}{|U_N|}\right) \tag{5.95}$$

Bei gegebener Netzspannung $U_N$ ist es sinnvoll, die o.g. Gleichungen nach $U'_2$ umzustellen, woraus sich

$$U'_2 = U_N \left(\frac{L_h}{L_h + L_{\sigma 1}}\right) + j\omega I'_2 \left(L'_{\sigma 2}{}' + \frac{L_{\sigma 1} L_h}{L_{\sigma 1} + L_h}\right) \tag{5.96}$$

ergibt. Für $Im(U'_2) = 0$ gilt dann

$$Im(U_N) \frac{L_h}{L_h + L_{\sigma 1}} = Re(I'_2)\omega \left(L' + \frac{L_{\sigma 1} L_h}{L_h + L_{\sigma 1}}\right) \tag{5.97}$$

Für den Lastwinkel $\vartheta_{last}$ kann nun

$$\vartheta_{last} = asin\left(Re(I'_2) \frac{\omega}{|U_N|} \left(L_{2\sigma}{}' \frac{L_h + L_{\sigma 1}}{L_h} + L_{\sigma 1}\right)\right) \tag{5.98}$$

geschrieben werden. Führt man den Leerlaufmagnetisierungsstrom $I_{h0}$ mit

$$I_{h0} = \frac{|U_N|}{\omega * (L_h + L_{\sigma 1})} \tag{5.99}$$

ein, erhält man die Schreibweise

$$\vartheta_{last} = asin\left(\frac{Re(I_2')}{I_{h0}}\left(\frac{L_{\sigma 2}'}{L_h} + \frac{L_{\sigma 1}}{L_h + L_{\sigma 1}}\right)\right) \tag{5.100}$$

Da $L_h \gg L_{\sigma 1}$ und $L_{\sigma 1} \approx L'_{\sigma 2}$ angenommen werden kann, vereinfacht sich diese Beziehung in guter Näherung zu

$$\vartheta_{last} \approx asin\left(\frac{Re(I_2')}{I_{h0}}\frac{2*L_{\sigma 1}}{L_h}\right) \tag{5.101}$$

Als Abschätzung bei Maschinen mit einer Leistung von ca. 1 kW kann $L_{\sigma 1}/L_h$ = 0,05 angesetzt werden. Bei einem Lastwinkel von $\vartheta_{last}$ = $\pi/4$ ergibt sich daraus, dass der Wirkanteil des Laststromes bereits den 10-fachen Wert des Magnetisierungsstromes erreichen kann. Technisch nutzbare Lastwinkel sind daher unterhalb von $\pi/4$ anzunehmen.
Im nachfolgenden Bild ist ein aus einer Simulation stammenden Ergebnis der Verlauf der Lastmomente beider Systeme und den sich dabei ergebenden Lastwinkeln $\vartheta_{last1,2}$ zu sehen. Abgebildet ist der Hochlauf von Drehzahl 0 auf Nenndrehzahl bei einem konstanten Lastmoment von 5 Nm.

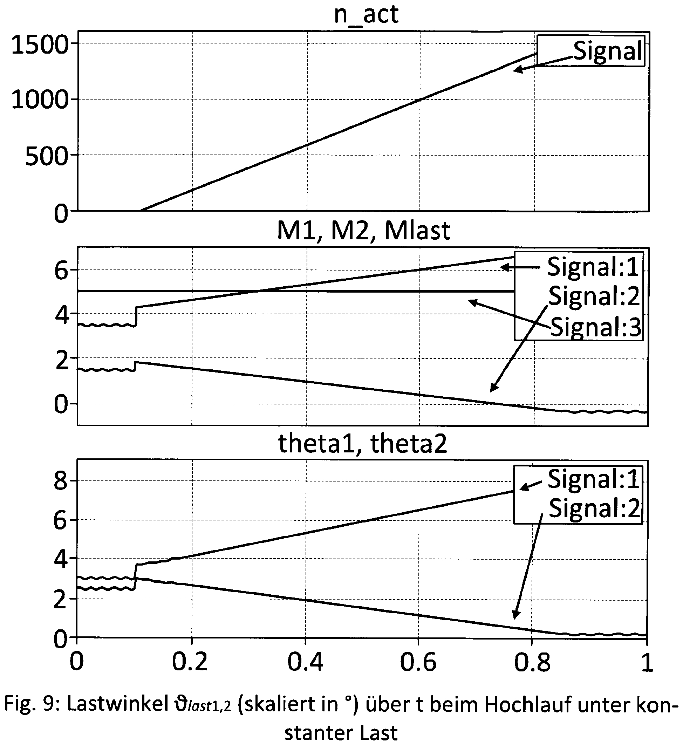

Fig. 9 zeigt den Lastwinkel $\vartheta_{last1,\ 2}$ (skaliert in °) über t beim Hochlauf unter konstanter Last.

### 5.3.6.2 Bestimmung der Netz- und Rotorspannungen unter Berücksichtigung von Rs und R'r

Aus dem Ersatzschaltbild eines Teilmotors nach Abbildung 5.1.1 lassen sich die folgenden Gleichungen ermitteln und ineinander einsetzen:

$$U_h = U_2' - I_2'\left(R_r' + j\omega L_r'\right) \tag{5.102}$$

$$I_h = \frac{U_h}{j\omega L_h} = \frac{U_2'}{j\omega L_h} - I_2'\frac{R_r' + j\omega L_r'}{j\omega L_h} \tag{5.103}$$

$$I_1 = I_h - I_2' = \frac{U_2'}{j\omega L_h} - I_2'\left(1 + \frac{R_r' + j\omega L_r'}{j\omega L_h}\right) \tag{5.104}$$

$$U_n = U_h + I_1\left(R_s + j\omega L_s\right) \tag{5.105}$$

$$U_n = U_2' - I_2'\left(R_r' + j\omega L_r'\right) + \left(\frac{U_2'}{j\omega L_h} - I_2'\left(1 + \frac{R_r' + j\omega L_r'}{j\omega L_h}\right)\right)\left(R_s + j\omega L_s\right) \tag{5.106}$$

$$U_n = U_2'\left(1 + \frac{R_s + j\omega L_s}{j\omega L_h}\right) - I_2'\left(R_r' + j\omega L_r' + R_s + j\omega L_s + \frac{R_r' + j\omega L_r'}{j\omega L_h}\left(R_s + j\omega L_s\right)\right) \tag{5.107}$$

$$U_n = U_2' \left(1 + \frac{L_s}{L_h} - j\frac{R_s}{\omega L_h}\right) - I_2' \left(R_s + R_r' + j\omega (L_s + L_r') + R_s \frac{L_r'}{L_h} + R_r' \frac{L_s}{L_h} - j\left(\frac{R_r' R_s}{\omega L_h} - \frac{\omega L_r' L_s}{L_h}\right)\right)$$

$$(5.108)$$

Die Amplitude der Netzspannung Un wird als bekannt angenommen. Der Strom $I_2$ wird eingeprägt. Daher ist umzustellen auf

$$U_2' = \frac{U_n + I_2' \left(R_s + R_r' + j\omega (L_s + L_r') + R_s \frac{L_r'}{L_h} + R_r' \frac{L_s}{L_h} - j\left(\frac{R_r' R_s}{\omega L_h} - \frac{\omega L_r' L_s}{L_h}\right)\right)}{\left(1 + \frac{L_s}{L_h} - j\frac{R_s}{\omega L_h}\right)}$$

$$(5.109)$$

was nach Trennung in von $U_n$ und $I'_2$ abhängige Komponenten

$$U_2' = \frac{U_n}{1 + \frac{L_s}{L_h} - j\frac{R_s}{\omega L_h}} + \frac{I_2' \left(R_s + R_r' + j\omega (L_s + L_r') + R_s \frac{L_r'}{L_h} + R_r' \frac{L_s}{L_h} - j\left(\frac{R_r' R_s}{\omega L_h} - \frac{\omega L_r' L_s}{L_h}\right)\right)}{1 + \frac{L_s}{L_h} - j\frac{R_s}{\omega L_h}}$$

$$(5.110)$$

ergibt.

Da der Rotorstrom $I'_2$ auf die Rotorspannung $U'_2$ orientiert ist, legt man die Rotorspannung $U'_2$ als Bezugsgröße vorteilhafterweise so, dass sich $U'_2 = Re(U'_2)$ bzw. $I_m(U'_2) = 0$ ergibt. Daraus folgt

$$Im\left(\frac{U_n}{1 + \frac{L_s}{L_h} - j\frac{R_s}{\omega L_h}}\right) = -Im\left(\frac{I_2' \left(R_s + R_r' + j\omega (L_s + L_r') + R_s \frac{L_r'}{L_h} + R_r' \frac{L_s}{L_h} - j\left(\frac{R_r' R_s}{\omega L_h} - \frac{\omega L_r' L_s}{L_h}\right)\right)}{1 + \frac{L_s}{L_h} - j\frac{R_s}{\omega L_h}}\right)$$

$$(5.111)$$

Führt man $I'_2 = I'_{2wirk} + jI'_{2blind}$ für den auf $U'_2$ orientierten Strom ein, so gilt für den um $\left(1 + \frac{LS}{Lh} - j\frac{RS}{\omega Lh}\right)$ gestreckt und gedrehten Strom

$$I_2^* = I_2' \frac{1}{1 + \frac{L_s}{L_h} - j\frac{R_s}{\omega L_h}}$$

$$(5.112)$$

mit $I^*_{2wirk} = Re(I^*_2)$ und $I^*_{2wirk} = Im(I^*_2)$ .

Der Realteil der ebenso gestreckt und gedrehten Netzspannung $U^*_n$ ist nun zu 0 zu setzen, woraus

$$Im(U_n^*) = -I_{2wirk}^* \left(\omega (L_s + L_r') + \frac{\omega L_r' L_s}{L_h} - \frac{R_r' R_s}{\omega L_h}\right) - I_{2blind}^* \left(L_s + L_r' + R_s \frac{L_r'}{L_h} + R_r' \frac{L_s}{L_h}\right)$$

$$(5.113)$$

abzuleiten ist. Für $Re(U^*_n)$ muss dann gelten:

$$Re(U_n^*) = \sqrt{\left|\left(\frac{|U_n|}{1 + \frac{L_s}{L_h} - j\frac{R_s}{\omega L_h}}\right)^2\right| - Im(U_n^*)^2} \tag{5.114}$$

Für die Netzspannung $U^*_n$ erhält man nun

$$U_n^* = Re(U_n^*) + jIm(U_n^*) \tag{5.115}$$

und für die rücktransformierte Netzspannung $U_n$

$$U_n = U_n^* \left(1 + \frac{L_s}{L_h} - j\frac{R_s}{\omega L_h}\right) \tag{5.116}$$

### 5.3.6.3 Bestimmung des Lastwinkels zwischen Netz- und Rotorspannung

Führt man in Gleichung 5.110 die Hilfsgrößen

$$x_1 = 1 + \frac{L_s}{L_h}, \; x_2 = \frac{R_s}{\omega L_h}$$

und

$$x_3 = 1 + \frac{L_r'}{L_h}$$

ein, verkürzt sich die Schreibweise für $U'_2$ auf

$$U_2' = \frac{U_n}{x_1 - jx_2} + \frac{I_2'}{x_1 - jx_2}\left(R_r'x_1 + R_s x_3 + j\omega\, L_r'x_1 + j\omega\, L_s - jR_r'x_2\right) \tag{5.117}$$

was nach Umformung auf einen realen Nenner

$$U_2' = U_n\frac{x_1 + jx_2}{x_1^2 + x_2^2} + I_2'\frac{x_1 + jx_2}{x_1^2 + x_2^2}\left(R_r'x_1 + R_s x_3 + j\omega\, L_r'x_1 + j\omega\, L_s - jR_r'x_2\right) \tag{5.118}$$

ergibt. Da $Im(U'_2) = 0$ durch Orientierung der Rotorspannung auf die reelle Achse festgelegt werden kann, folgt

$$Im\left(U_n\left(x_1 + jx_2\right)\right) = -Im\left(I_2'\left(x_1 + jx_2\right)\left(R_r'x_1 + R_s x_3 + j\omega\, L_r'x_1 + j\omega\, L_s - jR_r'x_2\right)\right) \tag{5.119}$$

Daraus folgt

$$Re(U_n)x_2 + Im(U_n)x_1 = \left(-Re(I_2')x_2 - Im(I_2')x_1\right)\left(R_r'x_1 + R_s x_3\right) \tag{5.120}$$
$$- \left(Re(I_2')x_1 - Im(I_2')x_2\right)\left(\omega\left(L_r'x_1 + L_s\right) - R_r'x_2\right)$$

Für die Netzspannung gilt der Zusammenhang

$$Re(U_n) = \sqrt{|U_n|^2 - Im(U_n)^2} \qquad (5.121)$$

Weiter kann als Bezugsgröße des Stromes der netzseitige Leerlaufmagnetisierungsstrom $I_{h0}$ mit

$$I_{h0} = \frac{|U_n|}{|R_s + j\omega(L_s + L_h)|} = \frac{|U_n|}{\left|\omega L_h \sqrt{(x_1^2 + x_2^2)}\right|} \qquad (5.122)$$

eingeführt werden, woraus sich

$$x_1 \frac{Im(U_n)}{|U_n|} + x_2 \sqrt{1 - \frac{Im(U_n)^2}{|U_n|^2}} = \frac{(-Re(I_2')x_2 - Im(I_2'x_1)(R_r'x_1 + R\,x_3)}{I_{h0}\,\omega L_h \sqrt{(x_1^2 + x_2^2)}}$$
$$- \frac{(Re(I_2')x_1 - Im(I_2'))(\omega(L_r'x_1 + L_s) - R_sx_2)}{I_{h0}\,\omega L_h \sqrt{(x_1^2 + x_2^2)}} \qquad \textbf{(5.123)}$$

entwickeln lässt. Unter Nutzung bekannter Additionstheoreme kann für die linke Seite

$$x_1 sin(\vartheta_{last}) + x_2\sqrt{1 - sin^2(\vartheta_{last})} = \sqrt{(x_1^2 + x_2^2)}cos\left(\vartheta_{last} + atan\frac{x_1}{x_2}\right) \qquad (5.124)$$

gesetzt werden, was auf eine geschlossene Formulierung des Lastwinkels $\theta_{last}$ als $\theta_{last} = f(Re(I'_2), Im(I'_2))$ führt:

$$\vartheta_{last} = acos\left(\frac{(-Re(I_2')x_2 - Im(I_2')x_1)(R_r'x_1 + R_sx_3) - (Re(I_2')x_1 - Im(I_2')x_2)(\omega(L_r'x_1 + L_s) - R_rx_2)}{I_{h0}\omega L_h(x_1^2 + x_2^2)}\right) \qquad (5.125)$$

Ohne rotorseitigem Wirkstrom ($Re(I'_2) = 0$) ergibt sich für den Lastwinkel $\vartheta_{last}0 = \vartheta_{last}(Re(I'_2) = 0)$

$$\vartheta_{last0} = acos\left(\frac{-Im(I_2')x_1(R_r'x_1 + R_sx_3) + Im(I_2')x_2(\omega(L_r'x_1 + L_s) - R_rx_2)}{I_{h0}\omega L_h(x_1^2 + x_2^2)}\right) - atan\frac{x_1}{x_2} \qquad (5.126)$$

**Beispielhafter Verlauf des Lastwinkels $\vartheta_{last}$**

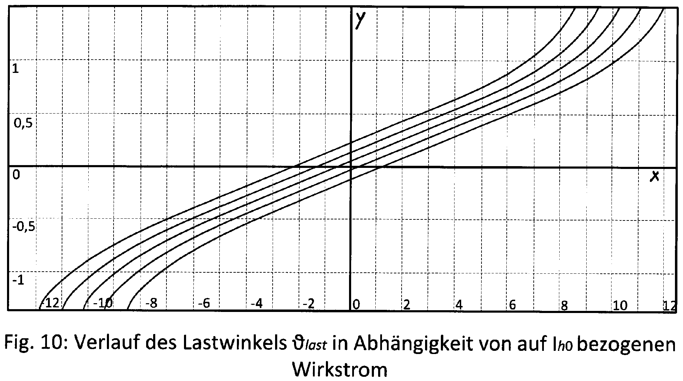

Orientiert man die in Gleichung 5.125 genutzten Parameter an einer beispielhaften Anwendung eines 750 Watt Motors mit den Werten
$L_s$= 21, 96$mH$ , $L'_r$= 22, 27$mH$ , $L_h$ = 454, 3$mH$ , $R_s$ = 7& , $R'_r$= 7$\Omega$ ,
$U_n$ = 230 $V$ und $f_n$ = 50$Hz$ ,
erhält man Kurvenverläufe, wie sie in Fig. 10 dargestellt sind. Der Wirkstrom ist in dieser Darstellung auf den Leerlaufstrom $I_{h0}$ bezogen. Der Verlauf zeigt, dass sich der Lastwinkel in weiten Bereichen linear mit dem Wirkstrom der Maschine ändert und dabei einen Offset aufweist, der durch Gleichung 5.126 beschrieben ist.

**5.3.6.4 Bestimmung der Frequenzabweichung des Netzes aus den Lagewinkeln der Rotorspannungen**

Als Ziel ist anzustreben, die Drehzahl des Motors ohne Sensorik zur Rückführung der Rotorlage oder -drehzahl zu ermitteln. Zur Verfügung stehen die auf der Rotorseite gemessenen Ströme der Wechselrichterphasen. Wie in Unterabschnitt 5.3.5 gezeigt wurde, können aus einer initialen Messung der Rotorspannungen vor dem Beginn der Modulation des Wechselrichters die Netzspannung, die Netzfrequenz sowie die aktuelle Drehzahl und Drehrichtung des Motors bestimmt werden.

Während des Betriebes des rotorseitigen Wechselrichters gilt für die Drehwinkel der Rotorspannungen der beiden Drehfelder gegenüber dem Phasenwinkel des Netzes als Bezugsgröße im eingeschwungenen Zustand

$$\varphi_1 = \omega_1\, t = (\omega_{N0} - p_1\omega_m)\, t\ + \vartheta_{1last}(M_1(s_1)) + \varphi_{10} \qquad (5.127)$$

$$\varphi_2 = \omega_2\, t = (\omega_{N0} + p_2\omega_m)\, t\ + \vartheta_{2last}(M_2(s_2)) + \varphi_{20} \qquad (5.128)$$

mit

$\omega_{1,2}$ = ausgegebene Frequenzen des Wechselrichters
$\omega_{N0}$ = angenommene Netzfrequenz
$\omega_m$ = angenommene Rotordrehzahl
$\vartheta_{1,2last}$ = lastabhängige Winkelauslenkung der Rotorspannungen gegenüber der Netzspannung
$\varphi_{10,20}$= Winkelauslenkung der Rotorspannung im momentenlosen Zustand

Da im Allgemeinen nicht davon ausgegangen werden kann, dass die Netzfrequenz und die Rotordrehzahl exakt diesen Bestimmungsgleichungen folgen, sind mögliche Abweichungen zu berücksichtigen.

$$(\omega_1 + \Delta\omega_1)\, t = (\omega_{N0} + \Delta\omega_N - p_1(\omega_m + \Delta\omega_m))\, t\ + \vartheta_{1last} + \varphi_{10} \qquad (5.129)$$

$$(\omega_2 + \Delta\omega_2)\, t = (\omega_{N0} + \Delta\omega_N + p_2(\omega_m + \Delta\omega_m))\, t\ + \vartheta_{2last} + \varphi_{20} \qquad (5.130)$$

Da

$$\omega_{1,2} = \omega_{N0} \mp p_{1,2}\, \omega_m \qquad (5.131)$$

gilt, genügt es, sich im Weiteren auf die Winkelabweichungen und die lastabhängigen Terme zu beschränken. Für die daraus resultierenden Fehlwinkel ergibt sich dann

$$\Delta\varphi_1 = \Delta\varphi_N - p_1\Delta\varphi_m + \vartheta_{1last} + \varphi_{10} \qquad (5.132)$$

$$\Delta\varphi_2 = \Delta\varphi_N + p_2\Delta\varphi_m + \vartheta_{2last} + \varphi_{20} \qquad (5.133)$$

woraus sich

$$\Delta\varphi_N = \frac{1}{p_1 + p_2}\,(p_1\,\Delta\varphi_2 + p_2\,\Delta\varphi_1) - \frac{1}{p_1 + p_2}\,(p_1\vartheta_{2last} + p_2\vartheta_{1last} + p_1\varphi_{20} + p_2\varphi_{10}) \qquad (5.134)$$

für einen durch eine Netzfrequenzverschiebung verursachten Fehlwinkel und

$$\Delta\varphi_m = \frac{1}{p_1 + p_2}\,(\Delta\varphi_2 - \Delta\varphi_1) - \frac{1}{p_1 + p_2}\,(\vartheta_{2last} - \vartheta_{1last} + \varphi_{20} - \varphi_{10}) \qquad (5.135)$$

für einen durch eine Drehzahlabweichung verursachten Fehlwinkel ableiten lässt.

Im ausgeregelten Zustand der Maschine wird der durch eine Drehzahlabweichung verursachte Fehlwinkel nach Gleichung 5.135 zu $\Delta\varphi_m = 0$. Dann ergibt sich, dass die Lastwinkel $\vartheta_{1last}$ und $\vartheta_{2last}$ nach Gleichung 5.125 aus den über die gemessenen Rotorströme gebildeten Winkel $\Delta\varphi_1$ und $\Delta\varphi_2$ bestimmt sind. Es gilt:

$$\vartheta_{1last} = \Delta\varphi_1 - \varphi_{10} \tag{5.136}$$

$$\vartheta_{2last} = \Delta\varphi_2 - \varphi_{20} \tag{5.137}$$

Weiter wird angenommen, dass sich die Lastwinkel $\vartheta_{1,2last}$ linear mit dem vom jeweiligen Teilsystem erzeugten Moment verhalten. Dann sei $\vartheta_0$ der Lastwinkel, der sich im 1.Teilsystem beim Erzeugen des momentanen Wellenmomentes $M_0$ einstellen würde. Analog dazu ist $\vartheta_{2last0}$ der Winkel im 2.Teilsystem, der sich beim Erzeugen des Momentes $M_0$ in diesem System ergeben würde. Bei einem konstanten Lastmoment entwickeln sich die Lastwinkel über dem Schlupf daher über

$$\vartheta_{1last}(s_1) = \vartheta_0 \frac{M_{mech1}}{M_0} = \vartheta_0 \left(1 - \frac{p_2}{p_1 + p_2}s_1\right) \tag{5.138}$$

$$\vartheta_{2last}(s_1) = \vartheta_{2last0} \frac{M_{mech2}}{M_0} = k_\vartheta \vartheta_0 \left(\frac{p_2}{p_1 + p_2}s_1\right) \tag{5.139}$$

mit

$$k_\vartheta = \frac{\vartheta_{2last0}}{\vartheta_0} \tag{5.140}$$

Darüber erhält man

$$\vartheta_{0N} = \frac{\vartheta_{2last}(s_1) - \vartheta_{1last}(s_1)}{(1 + k_\vartheta)\dfrac{p_2 s_1}{p_1 + p_2} - 1} = \frac{(\Delta\varphi_2 - \Delta\varphi_1) - (\varphi_{20} - \varphi_{10})}{(1 + k_\vartheta)\dfrac{p_2 s_1}{p_1 + p_2} - 1} \tag{5.141}$$

Die zusätzliche Indizierung von $\vartheta_0$ als $\vartheta_{0N}$ zeigt an, dass $\vartheta_{0N}$ unabhängig von einer Verschiebung der Netzfrequenz ist.

Im technisch interessierenden Bereich von $-4 < k_\vartheta < -0{,}5$ und $0 < s_1 < 3$ befindet sich keine Polstelle dieser Gleichung, weshalb darüber $\vartheta_{0N}$ zur Nachführung der Netzfrequenz im Folgenden genutzt werden kann.

Für den Ausdruck $p_1\vartheta_{1last} + p_2\vartheta_{2last}$, ergibt sich nun

$$p_1\vartheta_{2last} + p_2\vartheta_{1last} = \vartheta_{0N}\, p_2 \left(1 + s_1\left(\frac{k_\vartheta p_1 - p_2}{p_1 + p_2}\right)\right) \tag{5.142}$$

Für den Sonderfall mit $k_\vartheta = -1$ angenommen werden (das negative Vorzeichen erklärt sich aus der Wirkrichtung des 2. Teilsystems gegenüber dem ersten). In diesem Fall vereinfachen sich die oben angeführten Beziehungen zu

$$-\vartheta_{0N} = \vartheta_{2last} - \vartheta_{1last} \tag{5.143}$$

und

$$p_1 \vartheta_{2last} + p_2 \vartheta_{1last} = \vartheta_{0N} \, p_2 \, (1 - s_1) = \vartheta_{0N} \, p_2 \, \frac{n}{n_0} \qquad (5.144)$$

Der in Gleichung 5.142 genutzte Winkel $\vartheta_{0N}$ geht aus Gleichung 5.141 hervor. Er wird über die Differenz der Lastwinkel der Einzelsysteme gebildet und ist darüber unabhängig von einer Winkelverschiebung, die durch eine Frequenzabweichung der Netzfrequenz gebildet wird. Diese Unabhängigkeit ergibt sich aus

$$\frac{\partial \Delta \varphi_2}{\partial \Delta \varphi_N} - \frac{\partial \Delta \varphi_1}{\partial \Delta \varphi_N} = 0 \qquad (5.145)$$

Andersherum ergibt sich für den Ausdruck $p_1 \vartheta_{2last} + p_2 \vartheta_{1last}$ eine Unabhängigkeit von einer Winkelverschiebung, die sich durch eine Frequenzabweichung der Rotorfrequenz ergibt. Dieses zeigt sich über

$$p_1 \frac{\partial \Delta \varphi_2}{\partial \Delta \varphi_m} + p_2 \frac{\partial \Delta \varphi_1}{\partial \Delta \varphi_m} = 0 \qquad (5.146)$$

Beim Nutzen dieses Zusammenhangs erhält man für $\vartheta_{0m}$ den Ausdruck

$$\vartheta_{0m} = \frac{p_1 \vartheta_{2last}(s_1) + p_2 \vartheta_{1last}(s_1)}{p_2 \left(1 - \frac{p_2 - k_\vartheta p_1}{p_2 + p_1} s_1\right)} = \frac{(p_1 \Delta \varphi_2 + p_2 \Delta \varphi_1) - (p_1 \varphi_{20} + p_2 \varphi_{10})}{p_2 \left(1 - \frac{p_2 - k_\vartheta p_1}{p_2 + p_1} s_1\right)} \qquad (5.147)$$

Die Polstellen dieses Ausdrucks bestimmen sich zu

$$s_{1pol} = f(k_\vartheta) = \frac{p_2 + p_1}{p_2 - k_\vartheta p_1} \qquad (5.148)$$

Im technisch interessierenden Bereich von $-4 < k_\vartheta < -0{,}5$ und $0 < s_1 < 3$ befindet sich immer eine Polstelle der Gleichung 5.147, weshalb darüber $\vartheta_{0m}$ zur Berechnung der Rotordrehzahl nicht direkt gebildet werden kann.

**5.3.6.5 Bestimmung des Transformationswinkels der d-q-Transformation**

Die Transformationswinkel der d-q-Transformation bzw. deren Rücktransformation sind grundsätzlich durch Gleichung 5.129 und Gleichung 5.130 beschrieben. Für die von den Last-und Fehlwinkeln unabhängigen Transformationswinkel gilt Gleichung 5.131. Diesen sind Winkel, die sich aus den im obigen Abschnitt ermittelten Gleichungen zu

$$\Delta \varphi_{trans1} = \Delta \varphi_N - p_1 \Delta \varphi_m + \vartheta_{1last}(s_1) + \varphi_{10} \qquad (5.149)$$

bzw.

$$\Delta \varphi_{trans2} = \Delta \varphi_N + p_2 \Delta \varphi_m + \vartheta_{2last}(s_1) + \varphi_{20} \qquad (5.150)$$

oder ausgeschrieben zu

$$\Delta\varphi_{trans1} = \underbrace{\frac{p_1\left(\Delta\varphi_2 - \varphi_{20}\right) + p_2\left(\Delta\varphi_1 - \varphi_{10}\right)}{p_1 + p_2} - \frac{\vartheta_{0N}\, p_2\left(1 + s_1\left(\frac{k_\vartheta p_1 - p_2}{p_1 + p_2}\right)\right)}{p_1 + p_2}}_{\Delta\omega_N\, t = \Delta\varphi_N}$$

$$\underbrace{-\frac{p_1(\Delta\varphi_2 - \varphi_{20} - \Delta\varphi_1 + \varphi_{10})}{p_1 + p_2} + \frac{\vartheta_{0m}\, p_1\left((1 + k_\vartheta)\frac{p_2 s_1}{p_1 + p_2} - 1\right)}{p_1 + p_2}}_{p_1\Delta\omega_m\, t = p_1\Delta\varphi_m}$$

$$\underbrace{+\vartheta_{0m}\left(1 - \frac{p_2\, s_1}{p_1 + p_2}\right) + \varphi_{10}}_{\vartheta_{1last}} \qquad\qquad (5.151)$$

bzw.

$$\Delta\varphi_{trans2} = \underbrace{\frac{p_1\left(\Delta\varphi_2 - \varphi_{20}\right) + p_2\left(\Delta\varphi_1 - \varphi_{10}\right)}{p_1 + p_2} - \frac{\vartheta_{0N}\, p_2\left(1 + s_1\left(\frac{k_\vartheta p_1 - p_2}{p_1 + p_2}\right)\right)}{p_1 + p_2}}_{\Delta\omega_N\, t = \Delta\varphi_N}$$

$$\underbrace{+\frac{p_2(\Delta\varphi_2 - \varphi_{20} - \Delta\varphi_1 + \varphi_{10})}{p_1 + p_2} - \frac{\vartheta_{0m}\, p_2\left((1 + k_\vartheta)\frac{p_2 s_1}{p_1 + p_2} - 1\right)}{p_1 + p_2}}_{p_2\Delta\omega_m\, t = p_2\Delta\varphi_m}$$

$$\underbrace{+\frac{k_\vartheta\vartheta_{0m}\, p_2\, s_1}{p_1 + p_2} + \varphi_{20}}_{\vartheta_{2last}} \qquad\qquad (5.152)$$

bestimmen, hinzuzufügen. Nach algebraischer Zusammenfassung ergeben sich die einfachen Zusammenhänge

$$\Delta\varphi_{trans1} = \Delta\varphi_1 \qquad\qquad (5.153)$$

$$\Delta\varphi_{trans2} = \Delta\varphi_2 \qquad\qquad (5.154)$$

Die Winkel $\Delta\varphi_1$ und $\Delta\varphi_2$ sind in den hier gezeigten Zusammenhängen in den Bereichen von $-\pi/2 \le \Delta\varphi_{1,2} \le \pi/2$ über Gleichung 5.125 bestimmbar. Durch Netz- bzw. Rotordrehzahlabweichungen über die Zeit aufintegrierte Winkelanteile sind daher herauszutrennen und separat auszuregeln.

Bei einem rückgeführten System wird die durch eine Rotordrehzahlabweichung verursachte Winkelabweichung $\Delta_{\varphi_m} = 0$ gesetzt.

Der Netzfehlerwinkelanteil $\Delta\varphi_N$ der Transformation ist dann auf

$$\frac{p_1\left(\Delta\varphi_2 - \varphi_{20}\right) + p_2\left(\Delta\varphi_1 - \varphi_{10}\right)}{p_1 + p_2} = \frac{\vartheta_{0N}\, p_2}{p_1 + p_2}\left(1 + s_1\left(\frac{k_\vartheta p_1 - p_2}{p_1 + p_2}\right)\right) \qquad (5.155)$$

auszuregeln.

Für die zusätzlich aufzuschaltenden Winkel $\Delta_{\varphi transadd1,2}$ verbleiben die Ausdrücke

$$\Delta\varphi_{transadd1} = \vartheta_{0N}\left(1 - \frac{p_2 s_1}{p_1 + p_2}\right) + \varphi_{10} \qquad (5.156)$$

$$\Delta\varphi_{transadd2} = k_\vartheta\,\vartheta_{0N}\,\frac{p_2 s_1}{p_1 + p_2} + \varphi_{20} \qquad (5.157)$$

Bei nicht rückgeführten Systemen können die in Gleichung 5.151 und Gleichung 5.152 auftretenden von $\vartheta_{0m}$ abhängigen Terme zusammengefasst werden. Das führt auf

$$\frac{\vartheta_{0m}\,p_1\left((1+k_\vartheta)\frac{p_2 s_1}{p_1+p_2}-1\right)}{p_1+p_2} + \vartheta_{0m}\left(1 - \frac{p_2 s_1}{p_1+p_2}\right) = \frac{p_1\left(\Delta\varphi_2 - \varphi_{20}\right) + p_2\left(\Delta\varphi_1 - \varphi_{10}\right)}{p_1+p_2}$$
$$(5.158)$$

bzw.

$$\frac{-\vartheta_{0m}\,p_2\left((1+k_\vartheta)\frac{p_2 s_1}{p_1+p_2}-1\right)}{p_1+p_2} + \frac{k_\vartheta\vartheta_{0m}\,p_2\,s_1}{p_1+p_2} = \frac{p_1\left(\Delta\varphi_2 - \varphi_{20}\right) + p_2\left(\Delta\varphi_1 - \varphi_{10}\right)}{p_1+p_2}$$
$$(5.159)$$

Diese Ausdrücke sind - wie in Gleichung 5.146 gezeigt - unabhängig von einer drehzahlabhängigen Winkelverschiebung.

**Patentansprüche**

1. Verfahren zum Betreiben eines Antriebssystems (100), wobei das Antriebssystem (100) aufweist:

   - einen Drehstrommotor (10), aufweisend:

      - eine Welle (11),
      - eine erste dreiphasige Statorwicklung (12), die mit einem dreiphasigen Wechselspannungsnetz zu verbinden ist,
      - eine zweite dreiphasige Statorwicklung (13), die mit dem dreiphasigen Wechselspannungsnetz derart zu verbinden ist, dass sich gegenüber einem ersten Statordrehfeld, das mittels der ersten Statorwicklung erzeugt wird, ein gegensinnig umlaufendes zweites Statordrehfeld ergibt, und
      - ein Rotorwicklungssystem (14), das mit der Welle (11) drehfest mechanisch gekoppelt ist, und

   - mindestens einen Wechselrichter (15), der mit der Welle (11) drehfest mechanisch gekoppelt ist und der elektrisch mit dem Rotorwicklungssystem (14) gekoppelt ist, wobei der mindestens eine Wechselrichter (15) dazu ausgebildet ist, Ansteuersignale für das Rotorwicklungssystem (14) derart zu erzeugen, dass ein erstes Rotordrehfeld und ein zweites, zum ersten Rotordrehfeld gegenläufiges Rotordrehfeld erzeugt werden, **gekennzeichnet durch** die Schritte:
      - Erzeugen der Ansteuersignale für das Rotorwicklungssystem (14) ausschließlich in Abhängigkeit von rotorseitig erfassten Signalen.

2. Verfahren nach Anspruch 1, **dadurch gekennzeichnet, dass**

- die rotorseitig erfassten Signale Phasenstromsignale des Rotorwicklungssystems umfassen.

3. Verfahren nach Anspruch 2, **dadurch gekennzeichnet, dass**

- die rotorseitig erfassten Phasenstromsignale rechnerisch aufgeteilt werden in erste Anteile, die dem ersten Rotordrehfeld zugehören, und in zweite Anteile, die dem zweiten Rotordrehfeld zugehören.

4. Verfahren nach Anspruch 3, **dadurch gekennzeichnet, dass**

- die dem ersten Rotordrehfeld und dem zweiten Rotordrehfeld mittels des rechnerischen Aufteilens zugeordneten Phasenstromsignale bei unsymmetrischem zeitlichen Verlauf des dreiphasigen Wechselspannungsnetz rechnerisch in symmetrische Anteile mit mitdrehenden und gegendrehenden Anteilen aufgeteilt werden.

5. Verfahren nach Anspruch 4, **dadurch gekennzeichnet, dass**

- ein erster, zu dem ersten Rotordrehfeld gehörender Lastwinkel aus den aufgeteilten Phasenstromsignalen berechnet wird,
- ein zweiter, zu dem zweiten Rotordrehfeld gehörender Lastwinkel aus den aufgeteilten Phasenstromsignalen berechnet wird, und
- basierend auf dem ersten Lastwinkel und dem zweiten Lastwinkel ein tatsächlicher Netzspannungswinkel und/oder eine momentane Rotorlage ermittelt wird/werden.

6. Verfahren nach einem der vorhergehenden Ansprüche, **dadurch gekennzeichnet, dass**

- die rotorseitig erfassten Signale Rotorspannungen des Rotorwicklungssystems umfassen,
- wobei die Rotorspannungen des Rotorwicklungssystems in einem stromlosen Zustand des Rotorwicklungssystems gemessen werden, wobei Werte einer momentanen Netzspannungsamplitude, und/oder einer momentanen Netzfrequenz, und/oder einer momentanen Rotordrehzahl, und/oder eines momentanen Rotorlagewinkels basierend auf einem zeitlichen Verlauf der Rotorspannungen ermittelt werden.

7. Antriebssystem (100), aufweisend:

- einen Drehstrommotor (10), aufweisend:

  - eine Welle (11),
  - eine erste dreiphasige Statorwicklung (12), die mit einem dreiphasigen Wechselspannungsnetz zu verbinden ist,
  - eine zweite dreiphasige Statorwicklung (13), die mit dem dreiphasigen Wechselspannungsnetz derart zu verbinden ist, dass sich gegenüber einem ersten Statordrehfeld, das mittels der ersten Statorwicklung (12) erzeugt wird, ein gegensinnig umlaufendes zweites Statordrehfeld ergibt, und
  - ein Rotorwicklungssystem (14), das mit der Welle (11) drehfest mechanisch gekoppelt ist, und

- mindestens einen Wechselrichter (15), der mit der Welle (11) drehfest mechanisch gekoppelt ist und der elektrisch mit dem Rotorwicklungssystem (14) gekoppelt ist, wobei der mindestens eine Wechselrichter (15) dazu ausgebildet ist, Ansteuersignale für das Rotorwicklungssystem (14) derart zu erzeugen, dass ein erstes Rotordrehfeld und ein zweites, zum ersten Rotordrehfeld gegenläufiges Rotordrehfeld erzeugt werden,
**dadurch gekennzeichnet, dass**
- der mindestens eine Wechselrichter (15) dazu ausgebildet ist, die Ansteuersignale für das Rotorwicklungssystem (14) ausschließlich in Abhängigkeit von rotorseitig erfassten Signalen zu erzeugen.

8. Antriebssystem (100) nach Anspruch 7, aufweisend:

- eine Signalerfassungseinrichtung (16), die dazu ausgebildet ist, die rotorseitigen Signale zu erfassen.

**Claims**

1. Method for operating a drive system (100), wherein the drive system (100) comprises:

- a three-phase motor (10), comprising:

  - a shaft (11),
  - a first three-phase stator winding (12) which is to be connected to a three-phase AC voltage grid,
  - a second three-phase stator winding (13) which is to be connected to the three-phase AC voltage grid in such a way that a second stator rotating field rotating in opposition results with respect to a first stator rotating field which is generated by means of the first stator winding, and
  - a rotor winding system (14) which is mechanically coupled in a rotationally fixed manner to the shaft (11), and

  - at least one inverter (15) which is mechanically coupled in a rotationally fixed manner to the shaft (11) and which is electrically coupled to the rotor winding system (14), wherein the at least one inverter (15) is designed to generate actuation signals for the rotor winding system (14) in such a way that a first rotor rotating field and a second rotor rotating field rotating in opposition to the first rotor rotating field are generated, **characterized by** the steps of:
  - generating the actuation signals for the rotor winding system (14) solely depending on signals detected on the rotor side.

2. Method according to claim 1, **characterized in that**

   - the signals detected on the rotor side comprise phase current signals of the rotor winding system.

3. Method according to claim 2, **characterized in that**

   - the phase current signals detected on the rotor side are divided by calculation into first components, which belong to the first rotor rotating field, and into second components, which belong to the second rotor rotating field.

4. Method according to claim 3, **characterized in that**

   - the phase current signals which are associated with the first rotor rotating field and with the second rotor rotating field by means of the division by calculation are divided by calculation into symmetrical components with co-rotating and counter-rotating components given an asymmetrical time profile of the three-phase AC voltage grid.

5. Method according to claim 4, **characterized in that**

   - a first load angle, which belongs to the first rotor rotating field, is calculated from the divided phase current signals,
   - a second load angle, which belongs to the second rotor rotating field, is calculated from the divided phase current signals, and
   - an actual grid voltage angle and/or an instantaneous rotor position is/are ascertained based on the first load angle and the second load angle.

6. Method according to any of the preceding claims, **characterized in that**

   - the signals detected on the rotor side comprise rotor voltages of the rotor winding system,
   - wherein the rotor voltages of the rotor winding system are measured in a zero-current state of the rotor winding system, wherein values of an instantaneous grid voltage amplitude, and/or of an instantaneous grid frequency, and/or of an instantaneous rotor rotation speed, and/or of an instantaneous rotor position angle are ascertained based on a time profile of the rotor voltages.

7. Drive system (100), having:

   - a three-phase motor (10), comprising:

     - a shaft (11),
     - a first three-phase stator winding (12) which is to be connected to a three-phase AC voltage grid,
     - a second three-phase stator winding (13) which is to be connected to the three-phase AC voltage grid in such a way that a second stator rotating field rotating in opposition results with respect to a first stator rotating field which is generated by means of the first stator winding (12), and

- a rotor winding system (14) which is mechanically coupled in a rotationally fixed manner to the shaft (11), and

- at least one inverter (15) which is mechanically coupled in a rotationally fixed manner to the shaft (11) and which is electrically coupled to the rotor winding system (14), wherein the at least one inverter (15) is designed to generate actuation signals for the rotor winding system (14) in such a way that a first rotor rotating field and a second rotor rotating field rotating in opposition to the first rotor rotating field are generated, **characterized in that**

- the at least one inverter (15) is designed to generate the actuation signals for the rotor winding system (14) solely depending on signals detected on the rotor side.

8. Drive system (100) according to claim 7, having:

- a signal detection device (16) which is designed to detect the rotor-side signals.

**Revendications**

1. Procédé pour faire fonctionner un système d'entraînement (100), dans lequel le système d'entraînement (100) comporte :

- un moteur triphasé (10) qui présente :
- un arbre (11),
- un premier enroulement statorique triphasé (12) à relier à un réseau à tension alternative triphasé,
- un deuxième enroulement statorique triphasé (13) à relier au réseau à tension alternative triphasé, de manière à obtenir un deuxième champ tournant statorique qui tourne en sens inverse par rapport à un premier champ tournant statorique généré au moyen du premier enroulement statorique, et
- un système d'enroulement rotorique (14) qui est accouplé mécaniquement solidaire en rotation à l'arbre (11), et
- au moins un onduleur (15) qui est accouplé mécaniquement solidaire en rotation à l'arbre (11) et qui est couplé électriquement au système d'enroulement rotorique (14), dans lequel ledit au moins un onduleur (15) est conçu de manière à générer des signaux de commande pour le système d'enroulement rotorique (14) de sorte qu'un premier champ tournant rotorique et qu'un deuxième champ tournant rotorique qui tourne en sens inverse par rapport au premier champ tournant rotorique, soient générés,

**caractérisé par** les étapes consistant à :

- ne générer les signaux de commande pour le système d'enroulement rotorique (14) qu'en fonction des signaux détectés côté rotor.

2. Procédé selon la revendication 1, **caractérisé en ce que**

- les signaux détectés côté rotor comprennent des signaux de courant de phase du système d'enroulement rotorique.

3. Procédé selon la revendication 2, **caractérisé en ce que**

- les signaux de courant de phase détectés côté rotor sont décomposés par calcul en des premières composantes qui appartiennent au premier champ tournant rotorique et des deuxièmes composantes qui appartiennent au deuxième champ tournant rotorique.

4. Procédé selon la revendication 3, **caractérisé en ce que**

- les signaux de courant de phase associés au premier champ tournant rotorique et au deuxième champ tournant rotorique au moyen de la décomposition par calcul, dans le cas d'une courbe temporelle asymétrique du réseau à tension alternative triphasé, sont décomposés par calcul en composantes symétriques présentant des composantes corotatives et contrarotatives.

5. Procédé selon la revendication 4, **caractérisé en ce que**

- un premier angle de charge appartenant au premier champ tournant rotorique est calculé à partir des signaux de courant de phase décomposés,
- un deuxième angle de charge appartenant au deuxième champ tournant rotorique est calculé à partir des signaux de courant de phase décomposés, et
- sur la base du premier angle de charge et du deuxième angle de charge, un angle de tension secteur effectif et/ou une position rotorique instantanée est/sont déterminé(s).

6. Procédé selon l'une des revendications précédentes, **caractérisé en ce que**

- les signaux détectés côté rotor comprennent des tensions rotoriques du système d'enroulement rotorique,
- dans lequel les tensions rotoriques du système d'enroulement rotorique sont mesurées dans un état sans courant du système d'enroulement rotorique, dans lequel des valeurs d'une amplitude de tension secteur instantanée, et/ou d'une fréquence secteur instantanée, et/ou d'une vitesse de rotation rotorique instantanée, et/ou d'un angle de position rotorique instantanée, sont déterminées sur la base d'une courbe temporelle des tensions rotoriques.

7. Système d'entraînement (100), comportant :

- un moteur triphasé (10), qui présente :
- un arbre (11),
- un premier enroulement statorique triphasé (12) à relier à un réseau à tension alternative triphasé,
- un deuxième enroulement statorique triphasé (13), à relier au réseau à tension alternative triphasé, de manière à obtenir un deuxième champ tournant statorique qui tourne en sens inverse par rapport à un premier champ tournant statorique généré au moyen du premier enroulement statorique (12), et
- un système d'enroulement rotorique (14) qui est accouplé mécaniquement solidaire en rotation à l'arbre (11), et
- au moins un onduleur (15) qui est accouplé mécaniquement solidaire en rotation à l'arbre (11) et qui est couplé électriquement au système d'enroulement rotorique (14), dans lequel ledit au moins un onduleur (15) est conçu de manière à générer des signaux de commande pour le système d'enroulement rotorique (14) de sorte qu'un premier champ tournant rotorique et qu'un deuxième champ tournant rotorique qui tourne en sens inverse par rapport au premier champ tournant rotorique, soient générés,
- **caractérisé en ce que**
ledit au moins un onduleur (15) est conçu pour ne générer les signaux de commande pour le système d'enroulement rotorique (14) qu'en fonction des signaux détectés côté rotor.

8. Système d'entraînement (100) selon la revendication 7, comportant :

- un dispositif de détection de signaux (16) qui est conçu pour détecter les signaux côté rotor.

Fig. 1

$I_{ZK}$ $I_{Link1}$ To1,Do1 $I_{Link2}$ To2,Do2 $I_{Link3}$ To3,Do3 $I_{Link4}$ To4,Do4 $I_{Link5}$ To5,Do5 $I_{Link6}$ To6,Do6

CZK

Tu1,Du1 Tu2,Du2 Tu3,Du3 Tu4,Du4 Tu5,Du5 Tu6,Du6

$I_{\Phi1}$ $I_{\Phi2}$ $I_{\Phi3}$ $I_{\Phi4}$ $I_{\Phi5}$ $I_{\Phi6}$

L1 1    L2 2    L3 3    L4 4    L5 5    L6 6

Fig. 2: Zählrichtung und Bennenung der Wechselrichterströme

Fig. 3: Beispiel: 3-phasiges, unsymmetrisches Stromsystem

Fig. 4

Fig. 5: Lage der Stromkomponenten zum Bezugssystem

Fig. 6: Spannungssystem am Rotor

Fig. 7: Spannungssystem am Rotor mit getrennten Sternpunkten

Fig. 8: Ersatzschaltbild zur Bestimmung des Lastwinkels (ohne Berücksichtigung ohmscher Verluste)

33

Fig. 9: Lastwinkel $\vartheta_{last1,2}$ (skaliert in °) über t beim Hochlauf unter konstanter Last

Fig. 10: Verlauf des Lastwinkels $\vartheta_{last}$ in Abhängigkeit von auf $I_{h0}$ bezogenen Wirkstrom

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013208544 A1